(19) Europäisches Patentamt / European Patent Office / Office européen des brevets

(11) **EP 4 109 163 A1**

(12) **EUROPEAN PATENT APPLICATION**
published in accordance with Art. 153(4) EPC

(43) Date of publication:
**28.12.2022 Bulletin 2022/52**

(21) Application number: **20919571.8**

(22) Date of filing: **21.02.2020**

(51) International Patent Classification (IPC):
**G02B 13/00** (2006.01)  **G02B 13/18** (2006.01)

(52) Cooperative Patent Classification (CPC):
**G02B 13/00; G02B 13/18**

(86) International application number:
**PCT/CN2020/076235**

(87) International publication number:
**WO 2021/164013 (26.08.2021 Gazette 2021/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **TIANJIN OFILM OPTO ELECTRONICS
CO., LTD
Tianjin, 300385 (CN)**

(72) Inventors:
• **TSAI, Hsiung-yu**
  **Tianjin 300385 (CN)**
• **LAN, Binli**
  **Tianjin 300385 (CN)**
• **ZHOU, Rui**
  **Tianjin 300385 (CN)**

(74) Representative: **Inchingalo, Simona**
  **Bugnion S.p.A.
  Viale Lancetti, 17
  20158 Milano (IT)**

(54) **OPTICAL SYSTEM, CAMERA MODULE, ELECTRONIC DEVICE AND AUTOMOBILE**

(57)    Disclosed is an optical system (10), sequentially comprising, from an object side to an image side, a first lens (L1) having a negative refractive power; a second lens (L2) having a positive refractive power; a third lens (L3) and a fourth lens (L4) which have a refractive power; a fifth lens (L5) having a positive refractive power; a sixth lens (L6) having a refractive power; and a seventh lens (L7) having a negative refractive power. At least one of the lenses in the optical system (10) satisfies the following relationship: $(dn/dt)_i/(nd_{i-1})-\alpha_i < 0$, wherein $(dn/dt)_i$ is the refractive index temperature coefficient of the ith lens; the unit of $(dn/dt)_i$ is $(10^{-6}/K)$; $nd_i$ is the d light refractive index of the ith lens; $\alpha_i$ is the thermal expansion coefficient of the ith lens; and the unit of $\alpha_i$ is $(10^{-6}/K)$.

FIG. 2

**Description**

**TECHNICAL FIELD**

The present application relates to a field of optical technology, particularly, to an optical system, a camera module, an electronic device, and a vehicle.

**TECHNICAL BACKGROUND**

With the development of the vehicle-mounted industry, the market has higher and higher technical requirements for the vehicle-mounted camera device such as Advanced Driver Assistant System (ADAS), the driving recorder, and the reversing image display, which not only requires the device to have the characteristics of miniaturization and lightweight, but also requires the imaging performance to be higher and higher. While since the external environment of the vehicle is varied and extreme, the market attaches great importance to the stability of the imaging performance when the camera device is used in high temperature and low temperature environments.

Currently, camera lenses generally have an imaging quality in which the imaging is relatively clear in a normal temperature environment, but when used at a high temperature (e.g., 40°C, 50°C) or a low temperature (e.g., -20°C, -30°C) condition, the imaging would be blurred, and even if the lens itself is not sensitive to temperature, the imaging surface would still drift due to temperature changes. For example, the photosensitive element is fixed to the base, and in a high temperature environment, the material for making the base is thermally expanded and changes in length, and the photosensitive element moves together with the base in a direction away from the camera lenses. Similarly, in a low temperature environment, the material for making the base shrinks, and the photosensitive element moves together with the base in a direction approaching to the camera lenses. Since the position of the photosensitive surface of the photosensitive element with respect to the camera lenses varies with the temperature, the optimal imaging surface of the lenses cannot be well matched with the photosensitive surface, that is, the object side information cannot be well imaged on the photosensitive surface. Therefore, the imaging quality of a conventional camera module in the high temperature and low temperature environments is poor, which results in poor pictures of vehicle-mounted imaging, thereby affecting the driving safety of the vehicle.

**SUMMARY**

According to various examples of the present application, an optical system, a camera module, an electronic device, and a vehicle are provided.

An optical system includes, successively in order from an object side to an image side:

a first lens having a negative refractive power,
a second lens having a positive refractive power,
a third lens having a refractive power,
a fourth lens having a refractive power,
a fifth lens having a positive refractive power,
a sixth lens having a refractive power, and
a seventh lens having a negative refractive power;
and wherein at least one of the lenses in the optical system satisfies the following condition:

$$(dn/dt)_i/(nd_i-1)-\alpha_i < 0,$$

wherein $(dn/dt)_i$ is a refractive index temperature coefficient of an $i$-th lens, a unit of $(dn/dt)_i$ is $(10^{-6}/K)$, $nd_i$ is a d-light refractive index of the $i$-th lens, and $\alpha_i$ is a thermal expansion coefficient of the $i$-th lens, a unit of $\alpha_i$ is $(10^{-6}/K)$.

A camera module includes a photosensitive element and the optical system as described above, wherein the photosensitive element is arranged on the image side of the optical system.

An electronic device includes a housing and the camera module as described above, wherein the camera module is arranged on the housing.

A vehicle includes a vehicle body and the electronic device as described above, wherein the electronic device is arranged on the vehicle body.

Details of one or more examples of the present application are set forth in the following drawings and descriptions. Other features, objects and advantages of the present application will become apparent from the description, drawings, and claims.

## DESCRIPTION OF THE DRAWINGS

For a better description and illustration of examples and/or demonstrations of the contents disclosed herein, reference can be made to one or more of the drawings. Additional details or demonstrations used to describe the drawings should not be construed as limiting the scope of any of the disclosed contents, the currently described examples and/or demonstrations, and the best mode currently understood of the contents.

FIG. 1 is a schematic diagram of an optical system provided in a first example of the present application.
FIG. 2 is a defocus curve graph of the optical system in the first example at a central field of view at -40°C.
FIG. 3 is a defocus curve graph of the optical system in the first example at a central field of view at 20°C.
FIG. 4 is a defocus curve graph of the optical system in the first example at a central field of view at 85°C.
FIG. 5 is a schematic diagram of an optical system provided in a second example of the present application.
FIG. 6 is a defocus curve graph of the optical system in the second example at a central field of view at -40°C.
FIG. 7 is a defocus curve graph of the optical system in the second example at a central field of view at 20°C.
FIG. 8 is a defocus curve graph of the optical system in the second example at a central field of view at 85°C.
FIG. 9 is a schematic diagram of an optical system provided in a third example of the present application.
FIG. 10 is a defocus curve graph of the optical system in the third example at a central field of view at -40°C.
FIG. 11 is a defocus curve graph of the optical system in the third example at a central field of view at 20°C.
FIG. 12 is a defocus curve graph of the optical system in the third example at a central field of view at 85°C.
FIG. 13 is a schematic diagram of an optical system provided in a fourth example of the present application.
FIG. 14 is a defocus curve graph of the optical system in the fourth example at a central field of view at -40°C.
FIG. 15 is a defocus curve graph of the optical system in the fourth example at a central field of view at 20°C.
FIG. 16 is a defocus curve graph of the optical system in the fourth example at a central field of view at 85°C.
FIG. 17 is a schematic diagram of an optical system provided in a fifth example of the present application.
FIG. 18 is a defocus curve graph of the optical system in the fifth example at a central field of view at -40°C.
FIG. 19 is a defocus curve graph of the optical system in the fifth example at a central field of view at 20°C.
FIG. 20 is a defocus curve graph of the optical system in the fifth example at a central field of view at 85°C.
FIG. 21 is a schematic diagram of a camera module provided in an example of the present application.
FIG. 22 is a schematic diagram of an electronic device provided in an example of the present application.
FIG. 23 is a schematic diagram of a vehicle provided in an example of the present application.

## DETAILED DESCRIPTION OF THE IMPLEMENTATIONS

In order to facilitate understanding of the present application, the present application will be described more fully hereinafter with reference to the related drawings. Preferred implementations of the present application are shown in the drawings. However, the present application can be achieved in many different forms and is not limited to the implementations described herein. Rather, the purpose of providing these implementations is to make a more thorough and comprehensive understanding of the disclosure of the present application.

It should be noted that when an element is referred to as being "fixed" to an other element, it can be directly on the other element or there can be an intermediate element. When one element is considered to be "connected" to an other element, it can be directly connected to the other element or there can be an intermediate element at the same time. As used herein, the terms "inner", "outer", "left", "right", and the like, are used for purposes of illustration only and are not intended to be the only implementation.

Currently, camera lenses generally have an imaging quality in which the imaging is relatively clear in a normal temperature environment, but when used at a high temperature (e.g., 40°C, 50°C) or a low temperature (e.g., -20°C, -30°C) condition, the imaging would be blurred, and even if the lens itself is not sensitive to temperature, the imaging surface would still drift due to temperature changes. For example, the photosensitive element is fixed to the base, and in a high temperature environment, the material for making the base is thermally expanded and changes in length, and the photosensitive element moves together with the base in a direction away from the camera lenses. Similarly, in a low temperature environment, the material for making the base shrinks, and the photosensitive element moves together with the base in a direction approaching to the camera lenses. Since the position of the photosensitive surface of the photosensitive element with respect to the camera lenses varies with the temperature, the optimal imaging surface of the lenses cannot be well matched with the photosensitive surface, that is, the object side information cannot be well imaged on the photosensitive surface. Therefore, the imaging quality of a conventional camera module in the high temperature and low temperature environments is poor, which results in poor pictures of vehicle-mounted imaging, thereby affecting the driving safety of the vehicle. To this end, examples of the present application provide an optical system together with a photosensitive element in temperature variation.

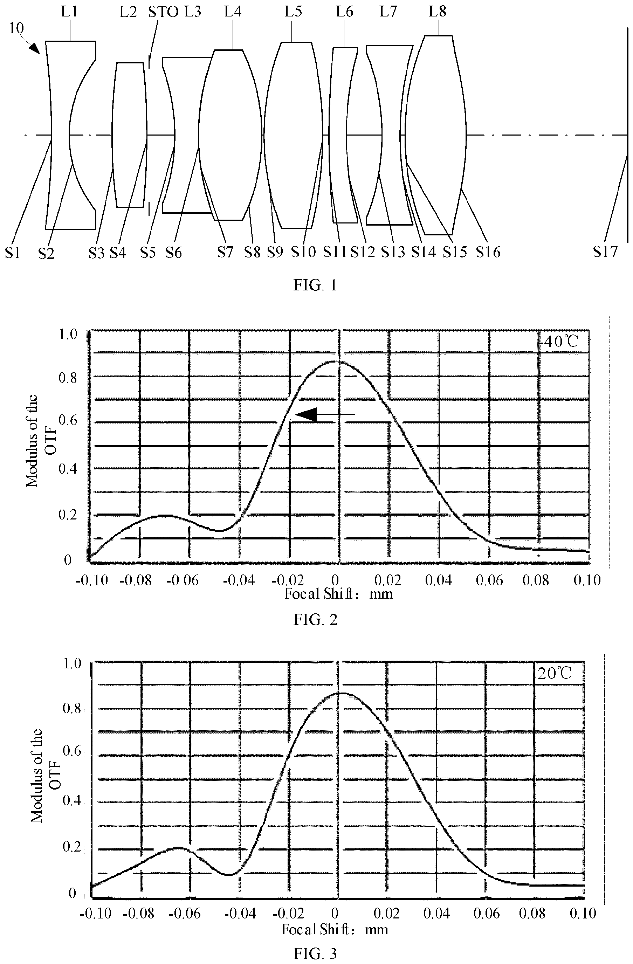

Referring to FIG. 1, in some examples of the present application, an optical system 10 includes, successively in order from an object side to an image side, a first lens L1 having a negative refractive power, a second lens L2 having a positive refractive power, a stop STO, a third lens L3 having a refractive power, a fourth lens L4 having a refractive power, a fifth lens L5 having a positive refractive power, a sixth lens L6 having a refractive power, a seventh lens L7 having a negative refractive power, and an eighth lens L8 having a positive refractive power. In this example, the first lens L1 to the eighth lens L8 each include only one lens, that is, the optical system 10 in this case is composed of eight lenses and a stop STO, so that the optical system 10 can be referred to as having an eight-piece structure. Each of the lenses and the stop STO in the optical system 10 are arranged coaxially, that is, an optical axis of each lens and the center of the stop STO are located on the same straight line. The straight line can be referred to as an optical axis of the optical system 10. In some examples, the stop STO can be arranged on an object side of the first lens L1, or between any two adjacent lenses in the optical system 10. As described above, by arranging the eighth lens L8 having the positive refractive power, a positive spheric aberration caused by the seventh lens L7 can be corrected, thereby improving the imaging quality; moreover, the light can be further converged, and the angle at which the light is incident on an imaging surface S17 of the system can be reduced while the structure size is reduced, so that it is beneficial for the photosensitive element to receive the light.

The first lens L1 includes an object side surface S1 and an image side surface S2. The second lens L2 includes an object side surface S3 and an image side surface S4. The third lens L3 includes an object side surface S5 and an image side surface S6. The fourth lens L4 includes an object side surface S7 and an image side surface S8. The fifth lens L5 includes an object side surface S9 and an image side surface S10. The sixth lens L6 includes an object side surface S11 and an image side surface S12. The seventh lens L7 includes an object side surface S13 and an image side surface S14. The eighth lens L8 includes an object side surface S15 and an image side surface S16. Additionally, the optical system 10 also includes an imaging surface S17 which is arranged on an image side of the eighth lens L8. The incident light can be imaged on the imaging surface S17 after being adjusted by each of the lenses of the optical system 10. Generally, the optical system 10 has a reference subject distance at which the optical information of a subject can be clearly imaged on the imaging surface S17 after being adjusted by each of the lenses. In this case, the imaging surface S17 can be understood as an optimal imaging surface. Accordingly, a photosensitive surface of a photosensitive element generally needs to be at the optimal imaging surface to enable a module to receive the clear imaging completely.

In the present example, the object side surface S1 of the first lens L1 is concave, and the image side surface S2 thereof is concave; both the object side surface S3 and the image side surface S4 of the second lens L2 are convex; both the object side surface S5 and the image side surface S6 of the third lens L3 are concave; both the object side surface S7 and the image side surface S8 of the fourth lens L4 are convex; both the object side surface S9 and the image side surface S10 of the fifth lens L5 are convex; the object side surface S11 of the sixth lens L6 is convex, and the image side surface S12 thereof is concave; both the object side surface S13 and the image side surface S14 of the seventh lens L7 are concave; and both the object side surface S15 and the image side surface S16 of the eighth lens L8 are convex. As described above, the object side surface S1 of the first lens L1 in some examples can also be convex; the object side surface S7 and the image side surface S8 of the fourth lens L4 in some examples can both be concave; the image side surface S12 of the sixth lens L6 in some examples can be convex; the object side surface S13 of the seventh lens L7 in some examples can be convex, and the image side surface S14 thereof can also be convex; and the image side surface S16 of the eighth lens L8 in some examples can be concave. When the above surface shape arrangements are satisfied, it is beneficial to improve the imaging resolution of the system, and to satisfy the characteristics of high pixel and miniaturization.

In the present example, the object side surface and the image side surface of each of the first lens L1 to the seventh lens L7 are spheric, while the object side surface S15 and the image side surface S16 of the eighth lens L8 are aspheric. The surface shape arrangement of spheric surface can greatly simplify the processing process of the lens, thereby effectively reducing the manufacturing cost of the lens; while the surface shape arrangement of aspheric surface can effectively help the optical system 10 to eliminate aberrations, solve the problem of distortion of the field of view, and facilitate the miniaturization design of the optical system 10, thereby enabling the optical system 10 to have excellent optical effects while maintaining the miniaturization design. In particular, when the lenses of the system close to the object side are spheric lenses, and only the lens closest to the image side is an aspheric lens, the aspheric lens can perform final correction for problems such as aberrations formed by each of the lenses at the object side, so that the optical system 10 achieves a balance between low cost and high imaging quality. Of course, in other examples, the object side surface of any of the lenses in the optical systems 10 can be spheric or aspheric; and the image side surface of any of the lenses in the optical system 10 can be spheric or aspheric. The flexibility of the design and assembly of the lenses in the optical system 10 can be improved by the cooperation of the spheric surfaces and the aspheric surfaces. Meanwhile, the correction of the aberration of the system is facilitated, thereby improving the imaging quality of the system.

Specifically, the surface shape calculation of aspheric surface can refer to an aspheric surface formula:

$$Z = \frac{cr^2}{1+\sqrt{1-(k+1)c^2r^2}} + \sum_i Ai\, r^i,$$

wherein Z is a distance from a corresponding point on an aspheric surface to a plane tangent to an apex of the surface, r is a distance from the corresponding point on the aspheric surface to an optical axis, c is a curvature of the apex of the aspheric surface, k is a conical coefficient, and Ai is a coefficient corresponding to the i-th term of high order terms in the surface shape formula of the aspheric surface.

In the present example, each of the lenses in the optical system 10 is made of glass. In other examples, the first lens L1 can be made of glass, and the second lens L2, the third lens L3, and the fourth lens L4 can all be made of plastic. In this case, since the lens arranged on the object side in the optical system 10 is made of glass, such glass lens arranged on the object side has a good resistance to extreme environments and is not susceptible to aging due to the influence of the environment at object side, Thus, when the optical system 10 is in an extreme environment such as exposure to the sun and high temperatures, this structure can effectively avoid a decrease in imaging quality and a decrease in service life of the optical system 10. The lens made of plastic can reduce the weight of the optical system 10 and reduce the production cost, while the lens made of glass can withstand relatively high temperatures and has excellent optical properties. Of course, the material configuration of lenses in the optical system 10 is not limited to the above examples, and any of the lenses can be made of plastic or glass.

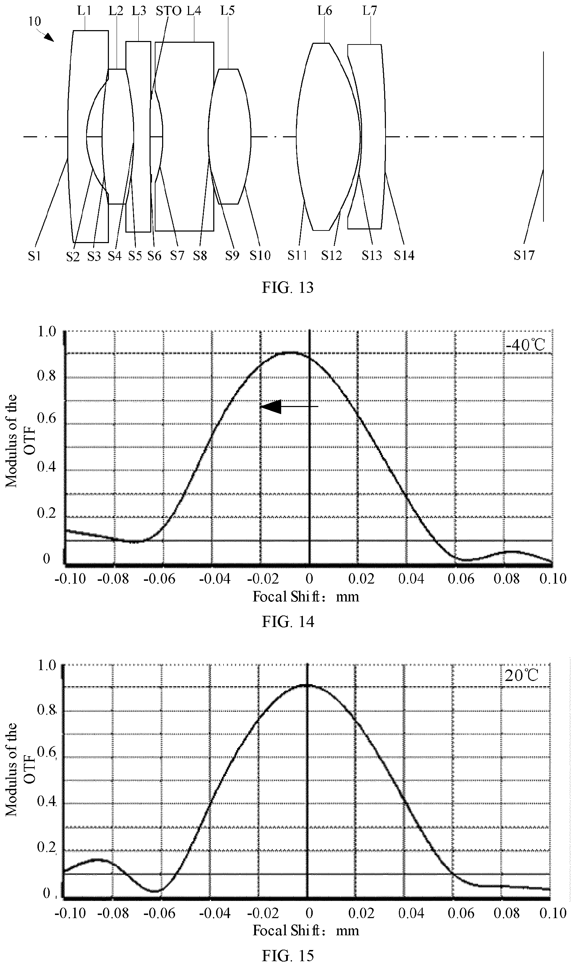

In another aspect, referring to FIG. 13, in some examples of the present application, the optical system 10 includes, successively in order from an object side to an image side, a first lens L1 having a negative refractive power, a second lens L2 having a positive refractive power, a third lens L3 having a refractive power, a stop STO, a fourth lens L4 having a refractive power, a fifth lens L5 having a positive refractive power, a sixth lens L6 having a refractive power, and a seventh lens L7 having a negative refractive power, and does not include an eighth lens L8. In these examples, the first lens L1 to the seventh lens L7 each include only one lens, that is, the optical system 10 in this case is composed of seven lenses and a stop STO, so that the optical system 10 can be referred to as having a seven-piece structure. Other arrangement manners of the stop STO and configuration of the materials for making lenses can refer to the example of the optical system 10 having an eight-piece structure as described above.

For an optical system 10 having a seven-piece structure, in some examples, an object side surface S1 of the first lens L1 is concave, and an image side surface S2 thereof is concave; both an object side surface S3 and an image side surface S4 of the second lens L2 are convex; both an object side surface S5 and an image side surface S6 of the third lens L3 are concave; both an object side surface S7 and an image side surface S8 of the fourth lens L4 are convex; both an object side surface S9 and an image side surface S10 of the fifth lens L5 are convex; an object side surface S11 of the sixth lens L6 is convex, and an image side surface S12 thereof is concave; and both an object side surface S13 and an image side surface S14 of the seventh lens L7 are concave. As described above, the object side surface S1 of the first lens L1 in some examples can also be convex; the object side surface S7 and the image side surface S8 of the fourth lens L4 in some examples can both be concave; the image side surface S12 of the sixth lens L6 in some examples can be convex; and in some examples, the object side surface S13 of the seventh lens L7 can be convex, and the image side surface S14 thereof can also be convex. When the above surface shape arrangements are satisfied, it is beneficial to improve the imaging resolution of the system, and to satisfy the characteristics of high pixel and miniaturization.

In another aspect, for the optical systems 10 having a seven-piece structure and the optical systems 10 having an eight-piece structure as described above, in some examples, both the object side surface S3 and the image side surface S4 of the second lens L2 are convex, both the object side surface S5 and the image side surface S6 of the third lens L3 are concave, and the second lens L2 and the third lens L3 are cemented to form a cemented lens. When the above arrangements are satisfied, the air spacing between the lenses in the system can be reduced, the influence of the high temperature or low temperature gas on the lenses can be reduced, and thus the temperature sensitivity of the lenses can be reduced; meanwhile, the length of the system in an axial direction can be shortened, the system assembly sensitivity can be reduced, the problems of the lens manufacturing process and lenses assembly can be resolved, and the yield rate can be improved.

In some examples, both the object side surface S5 and the image side surface S6 of the third lens L3 are concave, both the object side surface S7 and the image side surface S8 of the fourth lens L4 are convex, and the third lens L3 and the fourth lens L4 are cemented together to form a cemented lens. When the above arrangements are satisfied, the air spacing between the lenses in the system can be reduced, the influence of the high temperature or low temperature gas on the lenses can be reduced, and thus the temperature sensitivity of the lenses can be reduced; meanwhile, the length of the system in the axial direction can be shortened, the system assembly sensitivity can be reduced, the problems of the lens manufacturing process and lenses assembly can be resolved, and the yield rate can be improved.

In some examples, both the object side surface S7 and the image side surface S8 of the fourth lens L4 are concave, both the object side surface S9 and the image side surface S10 of the fifth lens L5 are convex, and the fourth lens L4 and the fifth lens L5 are cemented to form a cemented lens. When the above arrangements are satisfied, the air spacing between the lenses in the system can be reduced, the influence of the high temperature or low temperature gas on the lenses can be reduced, and thus the temperature sensitivity of the lenses can be reduced; meanwhile, the length of the system in the axial direction can be shortened, the system assembly sensitivity can be reduced, the problems of the lens manufacturing process and lenses assembly can be resolved, and the yield rate can be improved.

In some examples, the optical system 10 includes an infrared cut-off filter. The infrared cut-off filter can be arranged on an image side of the lens closest to the image side in the optical system 10 (in the system having a seven-piece structure, the lens closest to the image side is the seventh lens L7; and in the system having an eight-piece structure, the lens closest to the image side is the eighth lens L8). When the optical system 10 and a photosensitive element are assembled together into a camera module, the infrared cut-off filter is arranged between the lens and the photosensitive element. The infrared cut-off filter is used to filter out the infrared light to prevent the infrared light from reaching the imaging surface S17, thereby preventing the infrared light from interfering with normal imaging. The infrared cut-off filter can be assembled with the lenses as part of the optical system 10, or can be arranged between the optical system 10 and the photosensitive element when the optical system 10 and the photosensitive element are assembled into a camera module. In some examples, the infrared cut-off filter can also be arranged on the object side of the first lens L1. In addition, in some examples, the infrared cut-off filter may not be arranged, but an effect of filtering out infrared light can be achieved by arranging a filter coating on any of the lenses in the optical system 10.

For the optical systems 10 having a seven-piece structure and the optical systems 10 having an eight-piece structure as described above, in some examples, at least one of the lenses in the optical system 10 satisfies the following condition:

$$(dn/dt)_i/(nd_i-1)-\alpha_i < 0,$$

wherein $(dn/dt)_i$ is a refractive index temperature coefficient of an $i$-th lens, a unit of $(dn/dt)_i$ is $(10^{-6}/K)$, $nd_i$ is a d-light refractive index of the $i$-th lens, a d-light wavelength is 587.56 nm, and $\alpha_i$ is a thermal expansion coefficient of the $i$-th lens, a unit of $\alpha_i$ is $(10^{-6}/K)$. For the optical system 10 having a seven-piece structure, $i$ is at least one of 1, 2, 3, 4, 5, 6, and 7; and for the optical system 10 having an eight-piece structure, i is at least one of 1, 2, 3, 4, 5, 6, 7, and 8. For example, only the five lenses closest to the object side in the optical system 10 (the first lens L1 to the fifth lens L5) satisfy the above condition. Specifically, a value of $(dn/dt)_i/(nd_i-1)-\alpha_i$ in some examples can be -27.00, -26.00, -25.00, -23.00, -21.00, -20.00, -18.00, -15.00, -13.00, -10.00, - 8.00, -7.00, -6.00, -4.00, -3.00, -2.50, -2.00 or -1.00, and the units of the above values are $(10^{-6}/K)$. The refractive index temperature coefficient reflects the degree of change in refractive index of the material due to temperature change, and the thermal expansion coefficient determines the thermal deformation characteristics of the material due to temperature change. The refractive index and shape of the lens will change when the ambient temperature changes. The thermal stability of the material for making the lens can be measured. The lenses satisfying the above refractive power configurations and material conditions are selected to design the optical system 10. Thus, a position of an optimal imaging surface of the optical system 10 in a high temperature environment can be moved toward the image side, and the position of the optimal imaging surface in a low temperature environment can be moved toward the object side, thereby compensating the shift of the photosensitive surface of the photosensitive element in the environment of corresponding temperature, and reducing the phenomenon of blurring imaging caused by the position of the optimal imaging surface of the system being separated from the photosensitive surface due to temperature change. Therefore, it is beneficial to improve the stability of the imaging quality of the optical system 10 when the temperature changes (for example, changes to a high temperature or a low temperature), thereby achieving the purpose of improving the imaging quality.

In some examples, at least one of the lenses in the optical system 10 satisfies the following condition:

$$(dn/dt)_i +(nd_i-1)*\alpha_i < 17.$$

The surface shape of materials with uneven thickness is easy to change due to temperature change, thereby affecting the imaging resolution of the optical system 10. Specifically, a value of $(dn/dt)_i +(nd_i-1)*\alpha_i$ in some examples can be 1.00, 2.00, 3.00, 5.00, 6.00, 7.00, 9.00, 10.00, 12.00, 13.00, 14.00, 15.00, 15.50, 16.00, or 16.50, and the units of the above values are $(10^{-6}/K)$. By using the lens satisfying the above condition, it will be beneficial to improve the stability of the lens shape to temperature, and reduce the temperature sensitivity of the optical system 10.

In some examples, at least one of the lenses in the optical system 10 satisfies the following condition:

$$Vi*f/f_i < 0,$$

wherein $Vi=(dn/dt)_i/(nd_i-1)-\alpha_i$, f is an effective focal length of the optical system 10, and $f_i$ is a focal length of the i-th lens. Specifically, a value of $Vi*f/f_i$ in some examples can be - 23.00, -22.50, -22.00, -21.00, -18.00, -15.00, -10.00, -8.00, -7.00, -5.00, -4.00, -3.00, -2.00, -1.00, or -0.80, and the units of the above values are $(10^{-6}/K)$. The temperature change will cause the change of the refractive index of the lens. In the case where the refractive index temperature coefficient is positive, when the temperature increases, the refractive index of the lens will become larger, and the focal length of the lens will become shorter; and in the case where the refractive index temperature coefficient is negative, when the temperature increases, the refractive index of the lens will become smaller, and the focal length of the lens will become longer. Meanwhile, the direction in which a focal point of the optical system 10 moves is also related to the configuration of the refractive powers of lenses. Therefore, when at least one of the lenses in the optical system 10 satisfies the above condition, the moving direction and the offset of the imaging surface of the system under the temperature change can be adjusted. In addition, it is beneficial to the following: in an environment with changing temperature, the position of the optimal imaging surface of the optical system will not have too sensitive offset due to the changing temperature, thereby facilitating the reduction of the temperature sensitivity of the system, and enabling the system to maintain good imaging quality over a relatively wide temperature range.

Further, in some examples, the optical system 10 satisfies the following condition:

$$\Sigma(Vi*f/f_i) < 0,$$

wherein $Vi=(dn/dt)_i/(nd_i-1)-\alpha_i$, f is an effective focal length of the optical system 10, $f_i$ is a focal length of the i-th lens, and $\Sigma(Vi*f/f_i)$ is a sum of values of $Vi*f/f_i$ of all lenses in the optical system 10. For the optical system 10 having a seven-piece structure, the sum above is a sum of the values of $Vi*f/f_i$ for the first lens L1 to the seventh lens L7; and for the optical system 10 having an eight-piece structure, the sum above is a sum of the values of $Vi*f/f_i$ values for the first lens L1 to the eighth lens L8. Specifically, a value of $\Sigma(Vi*f/f_i)$ in some examples can be -11.00, -10.50, - 9.50, -8.00, -7.00, -5.00, -4.50, -4.00, or -3.50, and the units of the above values are $(10^{-6}/K)$. Since the base on which the lenses are mounted is usually made of plastic, or metallic material, the photosensitive surface may move in the direction away from the lenses due to the high temperature thermal expansion, or may move in the direction approaching the lenses due to the low temperature shrinkage. Therefore, when the above condition is satisfied, a good imaging quality of the optical system 10 can be maintained over a relatively wide temperature range, so that the system 10 can have a certain amount of focal length variation for compensating the position offset of the photosensitive surface due to the temperature environment change, and the over-correction of the optical system 10 can be avoided.

In some examples, the optical system 10 satisfies the following condition:

$$0.1 < \Sigma DT/TTL < 0.5,$$

wherein $\Sigma DT$ is a sum of spacing distances between adjacent lenses of the lenses on the optical axis in the optical system 10, $TTL$ is a total optical length of the optical system 10, and the total optical length is a distance from the object side surface S1 of the first lens L1 to the imaging surface S17 of the optical system 10 on the optical axis. Specifically, a value of $\Sigma DT/TTL$ in some examples can be 0.15, 0.18, 0.20, 0.25, 0.27, 0.28, or 0.30. When the above condition is satisfied, the air spacing between lenses in the optical system 10 can be reasonably configured, so that it is beneficial to shorten the overall length of the system and realize the miniaturization design. Meanwhile, since the air spacing between lenses can be shortened, the optical system 10 still has a low temperature sensitivity even when the ambient temperature changes in a gradient manner, which is beneficial for the optical system 10 to be normally used in high temperature and low temperature environments.

In some examples, the optical system 10 satisfies the following condition:

$$0.3 < BFL/f < 1.5,$$

wherein $BFL$ is a rear focal length of the optical system 10, the rear focal length is a distance from the image side surface of the last lens in the optical system 10 to the imaging surface S17 of the system on the optical axis, and f is an effective focal length of the optical system 10. In the system having a seven-piece structure, the last lens is the seventh lens L7; and in the system having an eight-piece structure, the last lens is the eighth lens L8. Specifically, a value of $BFL/f$ in some examples can be 0.50, 0.60, 0.80, 0.90, 1.00, 1.05, 1.10, or 1.15. When the above condition is satisfied, the optical system 10 reserves sufficient image side distance and space to receive a filter and a protective glass, and it is beneficial for module assembly. When less than the lower limit, it is disadvantageous to assemble the filter and other elements, and may increase the risk of collision of the lenses in the system in the process of assembling and focusing; and when exceeding the upper limit, the mechanical rear focus of the system is excessively long, which is disadvantageous to miniaturization design, and the excessively long mechanical rear focus can also cause the base on which the lenses are mounted to have sensitive thermal characteristics, which is disadvantageous to the use of the optical system 10 in an environment in which the temperature changes greatly.

In some examples, the optical system 10 satisfies the following condition:

$$1 < Imgh/f < 2,$$

Wherein *Imgh* is a diagonal length of an effective imaging region of the optical system 10 on the imaging surface S17, and *f* is an effective focal length of the optical system 10. Specifically, a value of *Imgh/f* in some examples can be 1.24, 1.25, 1.27, 1.29, 1.30, 1.32, 1.34, or 1.35. When the above condition is satisfied, it is not only beneficial to improve the imaging quality of the system, but also can control the overall length of the system, to minimize the volume of the lenses.

In some examples, the optical system 10 satisfies the following condition:

$$f/EPD \leqslant 2.0,$$

wherein f is an effective focal length of the optical system 10, and *EPD* is an entrance pupil diameter of the optical system 10. Specifically, a value of *f/EPD* in some examples can be 1.60, 1.62, 1.64, 1.66, 1.68, 1.70, 1.75, 1.80, 1.82, 1.83, 1.85, or 1.88. When the above condition is satisfied, the optical system 10 has an effect of a large aperture and a relatively large range of depth of field. Further, in some examples, the optical system 10 satisfies the following condition: *f/EPD* ≤1.6. In this case, the amount of light entering the optical system 10 can be further increased, and the depth of field of the system can be better.

In the above conditions involving *i,* for the optical system 10 having a seven-piece structure, *i* is at least one of 1, 2, 3, 4, 5, 6, and 7; and for the optical system 10 having an eight-piece structure, *i* is at least one of 1, 2, 3, 4, 5, 6, 7, and 8.

The optical system 10 of the present application will be described with more specific and detailed examples in the following.

First Example

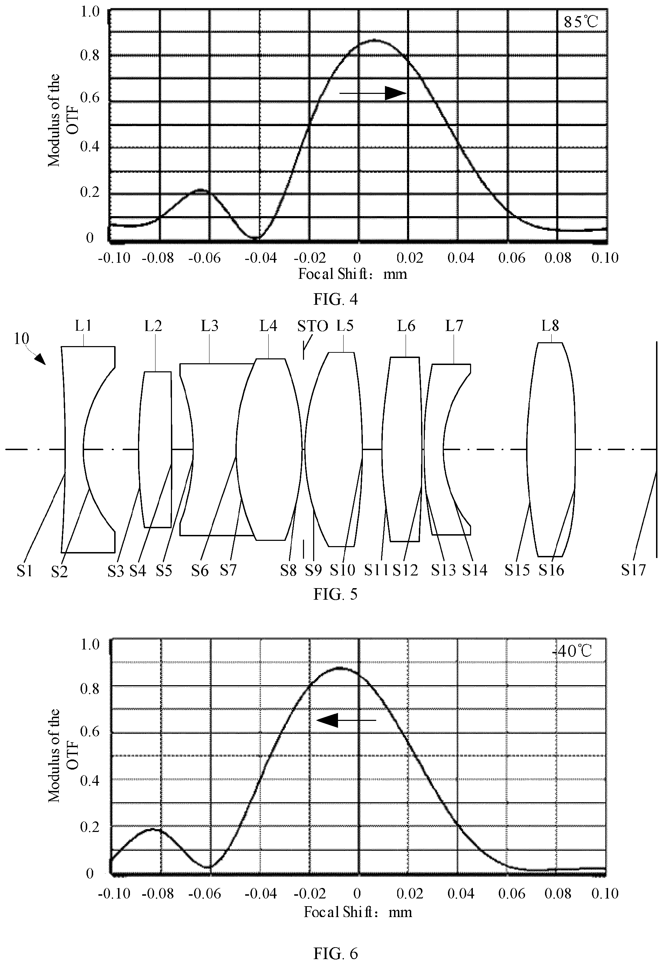

Referring to FIG. 1, in the first example, the optical system 10 includes, successively in order from an object side to an image side, a first lens L1 having a negative refractive power, a second lens L2 having a positive refractive power, a stop STO, a third lens L3 having a negative refractive power, a fourth lens L4 having a positive refractive power, a fifth lens L5 having a positive refractive power, a sixth lens L6 having a negative refractive power, a seventh lens L7 having a negative refractive power, and an eighth lens L8 having a positive refractive power. FIG. 2 is a defocus curve graph of the optical system 10 in the first example at a central field of view at -40°C. FIG. 3 is a defocus curve graph of the optical system 10 in the first example at the central field of view at 20°C. FIG. 4 is a defocus curve graph of the optical system 10 in the first example at the central field of view at 85°C.

An object side surface S1 of the first lens L1 is concave, and an image side surface S2 thereof is concave.

An object side surface S3 of the second lens L2 is convex, and an image side surface S4 thereof is convex.

An object side surface S5 of the third lens L3 is concave, and an image side surface S6 thereof is concave.

An object side surface S7 of the fourth lens L4 is convex, and an image side surface S8 thereof is convex.

An object side surface S9 of the fifth lens L5 is convex, and an image side surface S10 thereof is convex.

An object side surface S11 of the sixth lens L6 is convex, and an image side surface S12 thereof is concave.

An object side surface S13 of the seventh lens L7 is concave, and an image side surface S14 thereof is concave.

An object side surface S15 of the eighth lens L8 is convex, and an image side surface S16 thereof is convex.

The object side surface and the image side surface of each of the first lens L1 to the seventh lens L7 are spheric, and the object side surface S15 and the image side surface S16 of the eighth lens L8 are aspheric. By arranging the eighth lens L8 having the positive refractive power, a positive spheric aberration caused by the seventh lens L7 can be corrected, thereby improving the imaging quality; moreover, the light can be further converged, and the angle at which the light is incident on an imaging surface S17 of the system can be reduced, so that it is beneficial for the photosensitive element to receive the light. In addition, when the above surface shape arrangements are satisfied, it is beneficial to improve the imaging resolution of the system, and to satisfy the characteristics of high pixel and miniaturization.

Each of the lenses in the optical system 10 is made of glass.

In the first example, the optical system 10 satisfies the following conditions:

$$(dn/dt)_1/(nd_1-1)-\alpha_1=-12.89,$$

$$(dn/dt)_2/(nd_2-1)-\alpha_2=-2.92,$$

$$(dn/dt)_3/(nd_3-1)-\alpha_3=-5.43,$$

$$(dn/dt)_4/(nd_4-1)-\alpha_4=-25.22,$$

$$(dn/dt)_5/(nd_5-1)-\alpha_5=-0.88,$$

$$(dn/dt)_6/(nd_6-1)-\alpha_6=2.55,$$

$$(dn/dt)_7/(nd_7-1)-\alpha_7=2.55,$$

and

$$(dn/dt)_8/(nd_8-1)-\alpha_8=2.93,$$

wherein $(dn/dt)_i$ is a refractive index temperature coefficient of an $i$-th lens, a unit of $(dn/dt)_i$ is $(10^{-6}/K)$ in the present example, $nd_i$ is a d-light refractive index of the $i$-th lens, a d-light wavelength is 587.56 nm, and $\alpha_i$ is a thermal expansion coefficient of the $i$-th lens, a unit of $\alpha_i$ is $(10^{-6}/K)$ in the present example. The refractive index temperature coefficient reflects the degree of change in refractive index of the material due to temperature change, and the thermal expansion coefficient determines the thermal deformation characteristics of the material due to temperature change. The refractive index and shape of the lens will change when the ambient temperature changes. The thermal stability of the material for making the lens can be measured. The lenses satisfying the above refractive power configurations and material conditions are selected to design the optical system 10. Thus, a position of an optimal imaging surface of the optical system 10 in a high temperature environment can be moved toward the image side, and the position of the optimal imaging surface in a low temperature environment can be moved toward the object side, thereby compensating the shift of the photosensitive surface of the photosensitive element in the environment of corresponding temperature, and reducing the phenomenon of blurring imaging caused by the position of the optimal imaging surface of the system being separated from the photosensitive surface due to temperature change. Therefore, it is beneficial to improve the stability of the imaging quality of the optical system 10 when the temperature changes (for example, changes to a high temperature or a low temperature), thereby achieving the purpose of improving the imaging quality.

$$(dn/dt)_1 +(nd_1-1)*\alpha_1=2.68,$$

$$(dn/dt)_2 +(nd_2-1)*\alpha_2=12.27,$$

$$(dn/dt)_3 +(nd_3-1)*\alpha_3=7.27,$$

$$(dn/dt)_4 +(nd_4-1)*\alpha_4=-0.25,$$

$$(dn/dt)_5 + (nd_5-1)*\alpha_5 = 8.28,$$

$$(dn/dt)_6 + (nd_6-1)*\alpha_6 = 16.55,$$

$$(dn/dt)_7 + (nd_7-1)*\alpha_7 = 16.55,$$

and

$$(dn/dt)_8 + (nd_8-1)*\alpha_8 = 12.71.$$

The surface shape of materials with uneven thickness is easy to change due to temperature change, thereby affecting the imaging resolution of the optical system 10. By using the lens satisfying the above conditions, it will be beneficial to improve the stability of the lens shape to temperature, and reduce the temperature sensitivity of the optical system 10.

$$V_1*f/f_1 = 10.83,$$

$$V_2*f/f_2 = -1.77,$$

$$V_3*f/f_3 = 5.92,$$

$$V_4*f/f_4 = -23.40,$$

$$V_5*f/f_5 = -0.75,$$

$$V_6*f/f_6 = -0.67,$$

$$V_7*f/f_7 = -2.81,$$

and

$$V_8*f/f_8 = 3.21,$$

wherein $V_i=(dn/dt)_i/(nd_i-1)-\alpha_i$, $f$ is an effective focal length of the optical system 10, and $f_i$ is a focal length of the $i$-th lens. The temperature change will cause the change of the refractive index of the lens. In the case where the refractive index temperature coefficient is positive, when the temperature increases, the refractive index of the lens will become larger, and the focal length of the lens will become shorter; and in the case where the refractive index temperature coefficient is negative, when the temperature increases, the refractive index of the lens will become smaller, and the focal length of the lens will become longer. Meanwhile, the direction in which a focal point of the optical system 10 moves is also related to the configuration of the refractive powers of lenses. Therefore, when lenses in the optical system 10 satisfies the above conditions, the moving direction and the offset of the imaging surface of the system under the temperature change can be adjusted. In addition, it is beneficial to the following: in an environment with changing temperature, the position of the optimal imaging surface of the optical system will not have too sensitive offset due to the changing temperature, thereby facilitating the reduction of the temperature sensitivity of the system, and enabling the system to maintain good imaging quality over a relatively wide temperature range.

$\Sigma(V_i{}^*f/f_i)=-9.44(10^{-6}/K)$, wherein $V_i=(dn/dt)_i/(nd_i-1)-\alpha_i$, $f$ is an effective focal length of the optical system 10, $f_i$ is a focal length of the $i$-th lens, and $\Sigma(V_i{}^*f/f_i)$ is a sum of values of $V_i{}^*f/f_i$ of all lenses in the optical system 10. Since the optical system 10 of such example has an eight-piece structure, the sum above in such example is a sum of the values $Vi{}^*f/f_i$ for the first lens L1 to the eighth lens L8. Since the base on which the lenses are mounted is usually is made of plastic or metallic material, the photosensitive surface may move in the direction away from the lenses due to the high temperature thermal expansion, or may move in the direction approaching the lenses due to the low temperature shrinkage. Therefore, when the above condition is satisfied, a good imaging quality of the optical system 10 can be maintained over a relatively wide temperature range, so that the system 10 can have a certain amount of focal length variation for compensating the position offset of the photosensitive surface due to the temperature environment change, and the over-correction of the optical system 10 can be avoided.

$\Sigma DT/TTL=0.21$, wherein $\Sigma DT$ is a sum of spacing distances between adjacent lenses of the lenses on an optical axis in the optical system 10, $TTL$ is a total optical length of the optical system 10, and the total optical length is a distance from the object side surface S1 of the first lens L1 to the imaging surface S17 of the optical system 10 on the optical axis. When the above condition is satisfied, the air spacing between lenses in the optical system 10 can be reasonably configured, so that it is beneficial to shorten the overall length of the system and realize the miniaturization design. Meanwhile, since the air spacing between lenses can be shortened, the optical system 10 still has a low temperature sensitivity even when the ambient temperature changes in a gradient manner, which is beneficial for the optical system 10 to be normally used in high temperature and low temperature environments.

$BFL/f=0.99$, wherein $BFL$ is a rear focal length of the optical system 10, the rear focal length is a distance from the image side surface of the last lens in the optical system 10 to the imaging surface S17 of the system on the optical axis, and $f$ is an effective focal length of the optical system 10. In the present example, the last lens is the eighth lens L8. When the above condition is satisfied, the optical system 10 reserves sufficient image side distance and space to receive an infrared filter and a protective glass, and it is beneficial for module assembly. When less than the a lower limit, it is disadvantageous to assemble the infrared filter and other elements, and may increase the risk of collision of the lenses in the system in the process of assembling and focusing; and when exceeding the upper limit, the mechanical rear focus of the system is excessively long, which is disadvantageous to miniaturization design, and the excessively long mechanical rear focus can also cause the base on which the lenses are mounted to have sensitive thermal characteristics, which is disadvantageous to the use of the optical system 10 in an environment in which the temperature changes greatly.

$Imgh/f=1.23$, wherein $Imgh$ is a diagonal length of an effective imaging region of the optical system 10 on the imaging surface S17, and $f$ is an effective focal length of the optical system 10. When the above condition is satisfied, it is not only beneficial to improve the imaging quality of the system, but also can control the overall length of the system to minimize the volume of the lenses.

$f/EPD=1.64$, wherein $f$ is an effective focal length of the optical system 10, and $EPD$ is an entrance pupil diameter of the optical system 10. When the above condition is satisfied, the optical system 10 has an effect of a large aperture and a relatively large range of depth of field.

When the above conditions are satisfied, the optical system 10 can provide excellent imaging quality, and when the ambient temperature changes (for example, changes from normal temperature to high temperature or low temperature), the position of the optimal imaging surface of the optical system 10 can move accordingly when the temperature changes, so as to compensate for the positional offset of the photosensitive surface of the photosensitive element, thereby providing excellent stability for the imaging quality of the finally assembled module in environments such as high temperature and low temperature.

In addition, parameters of the lenses of the optical system 10 is given in Table 1 and Table 2. Table 2 shows an aspheric coefficient of the first example, $K$ in Table 2 is a conical coefficient, and $Ai$ is a coefficient corresponding to the $i$-th term of high order terms in the surface shape formula of the aspheric surface. The elements from an object surface to the image surface (imaging surface S17) are sequentially arranged in the order of the elements from the top to the bottom of Table 1, wherein an subject located on the object surface can be clearly imaged on the imaging surface S17 of the optical system 10. The surface numbers 1 and 2 indicate the object side surface S1 and the image side surface S2 of the first lens L1 respectively. That is, in the same lens, the surface with a smaller surface number is the object side surface, and the surface with a larger surface number is the image side surface. The Y radius in Table 1 is the radius of curvature of the object side surface or image side surface with a corresponding surface number at a paraxial position (or understood as being on the optical axis). In the "Thickness" parameter column, the first value of the lens is the thickness of the lens on the optical axis, and the second value is a distance from the image side surface of the lens to the object side surface of a following lens on the optical axis. The value of the stop STO in the "Thickness" parameter column is a distance from the stop STO to an apex of an object side surface (the apex refers to a point of intersection of the lens and the optical axis) of a following lens (the third lens L3 in the present example) on the optical axis. By default, the direction from the object side surface of the first lens L1 to the image side surface of the last lens is the positive direction of the optical axis. When the value of the stop STO in the "Thickness" parameter column is negative, it indicates that the stop STO is provided on the right side of the apex of the object side surface of the lens (or it can be understood as being located on the image side of the apex), and when the value of the stop STO in the "Thickness" parameter column is positive, the stop STO is located on the left side of the apex of the object side surface of the lens (or it can be understood as being located on the object side of the apex). The optical axes of lenses in the example of the present application and the center of the stop STO are located on the same straight line, which serves as the optical axis of the optical system 10. The value of the "Thickness" parameter indicated by the surface number 16 is the distance from the image side surface S16 of the eighth lens L8 to the image surface (imaging surface S17) of the optical system 10 on the optical axis.

In the first example, an effective focal length of the optical system 10 $f$=8.39 mm, a f-number $FNO$=1.64, a maximum angle of field of view (diagonal viewing angle) $FOV$=71.6°, a total optical length $TTL$=29.59 mm, and the total optical length $TTL$ is a distance from the object side surface S1 of the first lens L1 to the imaging surface S17 of the optical system 10 on the optical axis.

Additionally, in the following examples (the first example, the second example, the third example, the fourth example, and the fifth example), the refractive index, the Abbe number, and the focal length of each of the lenses has the value at a wavelength of 587.56 nm. The calculation of conditions and lens structures of each of the examples are based on the data in tables of the lens parameters, such as Table 1, Table 2, Table 3, and Table 4.

Table 1

| First Example | | | | | | | | |
|---|---|---|---|---|---|---|---|---|
| f=8.39 mm, FNO=1.64, FOV=71.6° | | | | | | | | |
| Surface number | Surface name | Surface shape | Y radius (mm) | Thickness (mm) | Material | Refractive index | Abbe number | Focal length (mm) |
| 0 | Object surface | Spheric | Infinite | 5000 | | | | |
| 1 | First lens | Spheric | -33.930 | 0.90 | Glass | 1.487 | 70.4 | -9.99 |
| 2 | | Spheric | 5.755 | 2.20 | | | | |
| 3 | Second lens | Spheric | 25.394 | 1.79 | Glass | 2.051 | 26.9 | 13.85 |
| 4 | | Spheric | -33.536 | 0.11 | | | | |
| | Stop | Spheric | Infinite | 1.33 | | | | |
| 6 | Third lens | Spheric | -9.392 | 1.22 | Glass | 1.640 | 34.5 | -7.70 |
| 7 | Fourth lens | Spheric | 11.054 | 3.25 | Glass | 1.593 | 68.5 | 9.04 |
| 8 | | Spheric | -9.333 | 0.11 | | | | |
| 9 | Fifth lens | Spheric | 12.292 | 3.02 | Glass | 1.773 | 49.6 | 9.91 |
| 10 | | Spheric | -18.327 | 0.31 | | | | |
| 11 | Sixth lens | Spheric | 39.232 | 0.90 | Glass | 1.805 | 25.5 | -31.84 |
| 12 | | Spheric | 15.432 | 1.83 | | | | |
| 13 | Seventh lens | Spheric | -10.811 | 0.92 | Glass | 1.805 | 25.5 | -7.61 |
| 14 | | Spheric | 15.001 | 0.25 | | | | |
| 15 | Eighth lens | Aspheric | 12.059 | 3.14 | Glass | 1.851 | 40.1 | 7.66 |
| 16 | | Aspheric | -12.661 | 8.30 | | | | |
| | Image surface | Spheric | Infinite | 0.00 | | | | |

Table 2

| Surface number | 15 | 16 |
|---|---|---|
| K | 0.00E+00 | -8.54E+00 |
| A4 | -9.39E-05 | -1.77E-04 |
| A6 | 2.77E-06 | 1.18E-05 |
| A8 | 2.40E-08 | 0.00E+00 |
| A10 | 0.00E+00 | 0.00E+00 |
| A12 | 0.00E+00 | 0.00E+00 |
| A14 | 0.00E+00 | 0.00E+00 |
| A16 | 0.00E+00 | 0.00E+00 |
| A18 | 0.00E+00 | 0.00E+00 |
| A20 | 0.00E+00 | 0.00E+00 |

Second Example

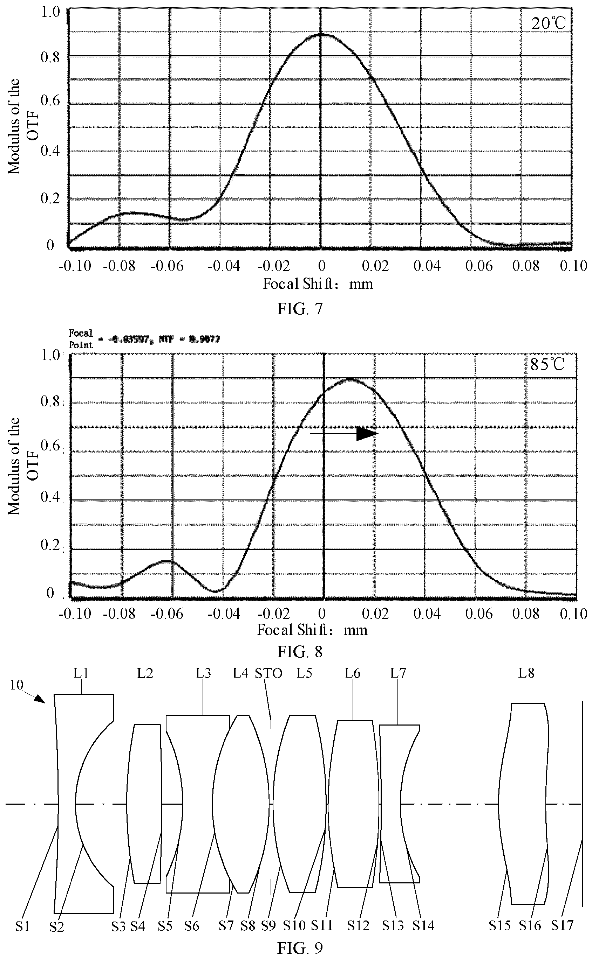

Referring to FIG. 5, in the second example, an optical system 10 includes, successively in order from an object side to an image side, a first lens L1 having a negative refractive power, a second lens L2 having a positive refractive power, a third lens L3 having a negative refractive power, a fourth lens L4 having a positive refractive power, a stop STO, a fifth lens L5 having a positive refractive power, a sixth lens L6 having a positive refractive power, a seventh lens L7 having a negative refractive power, and an eighth lens L8 having a positive refractive power. FIG. 6 is a defocus curve graph of the optical system 10 in the second example at a central field of view at -40°C. FIG. 7 is a defocus curve graph of the optical system 10 in the second example at the central field of view at 20°C. FIG. 8 is a defocus curve graph of the optical system 10 in the second example at the central field of view at 85°C.

An object side surface S1 of the first lens L1 is concave, and an image side surface S2 thereof is concave.

An object side surface S3 of the second lens L2 is convex, and an image side surface S4 thereof is convex.

An object side surface S5 of the third lens L3 is concave, and an image side surface S6 thereof is concave.

An object side surface S7 of the fourth lens L4 is convex, and an image side surface S8 thereof is convex.

An object side surface S9 of the fifth lens L5 is convex, and an image side surface S10 thereof is convex.

An object side surface S11 of the sixth lens L6 is convex, and an image side surface S12 thereof is convex.

An object side surface S13 of the seventh lens L7 is convex, and an image side surface S14 thereof is concave.

An object side surface S15 of the eighth lens L8 is convex, and an image side surface S16 thereof is convex.

Additionally, the parameters of the lenses of the optical system 10 are given in Table 3 and Table 4, wherein the definition of each of the parameters can be obtained from the first example and will not be repeated here.

Table 3

| Second Example | | | | | | | | |
|---|---|---|---|---|---|---|---|---|
| f=8.48 mm, FNO=1.60, FOV=70.6° | | | | | | | | |
| Surface number | Surface name | Surface shape | Y radius (mm) | Thickness (mm) | Material | Refractive index | Abbe number | Focal length (mm) |
| 0 | Object surface | Spheric | Infinite | 5050 | | | | |
| 1 | First lens | Spheric | -65.000 | 0.90 | Glass | 1.457 | 90.3 | -11.47 |
| 2 | | Spheric | 5.736 | 2.73 | | | | |
| 3 | Second lens | Spheric | 24.008 | 1.63 | Glass | 2.051 | 26.9 | 20.99 |
| 4 | | Spheric | -293.51 | 1.07 | | | | |
| 5 | Third lens | Spheric | -9.770 | 2.11 | Glass | 1.593 | 35.4 | -7.90 |

(continued)

| Second Example | | | | | | | | |
|---|---|---|---|---|---|---|---|---|
| f=8.48 mm, FNO=1.60, FOV=70.6° | | | | | | | | |
| Surface number | Surface name | Surface shape | Y radius (mm) | Thickness (mm) | Material | Refractive index | Abbe number | Focal length (mm) |
| 6 | Fourth lens | Spheric | 9.840 | 3.27 | Glass | 1.593 | 67.0 | 9.40 |
| 7 | | Spheric | -11.368 | 0.07 | | | | |
| | Stop | Spheric | Infinite | 0.07 | | | | |
| 9 | Fifth lens | Spheric | 9.749 | 2.83 | Glass | 1.593 | 68.6 | 12.39 |
| 10 | | Spheric | -26.931 | 0.97 | | | | |
| 11 | Sixth lens | Aspheric | 16.652 | 1.97 | Glass | 1.882 | 37.2 | 16.13 |
| 12 | | Aspheric | -96.291 | 0.12 | | | | |
| 13 | Seventh lens | Spheric | 20.746 | 0.94 | Glass | 1.805 | 25.5 | -9.91 |
| 14 | | Spheric | 5.683 | 4.12 | | | | |
| 15 | Eighth lens | Aspheric | 17.597 | 2.40 | Glass | 1.497 | 81.6 | 29.01 |
| 16 | | Aspheric | -77.46 | 4.03 | | | | |
| | Image surface | Spheric | Infinite | 0.00 | | | | |

Table 4

| Surface number | 11 | 12 | 15 | 16 |
|---|---|---|---|---|
| K | 0.00E+00 | 0.00E+00 | 0.00E+00 | 0.00E+00 |
| A4 | -4.64E-04 | -2.80E-04 | -4.09E-04 | -3.93E-04 |
| A6 | -2.99E-06 | 7.66E-06 | -6.76E-06 | -2.21E-05 |
| A8 | 1.46E-07 | 1.33E-07 | 4.56E-07 | 4.01E-07 |
| A10 | 0.00E+00 | 0.00E+00 | 0.00E+00 | 0.00E+00 |
| A12 | 0.00E+00 | 0.00E+00 | 0.00E+00 | 0.00E+00 |
| A14 | 0.00E+00 | 0.00E+00 | 0.00E+00 | 0.00E+00 |
| A16 | 0.00E+00 | 0.00E+00 | 0.00E+00 | 0.00E+00 |
| A18 | 0.00E+00 | 0.00E+00 | 0.00E+00 | 0.00E+00 |
| A20 | 0.00E+00 | 0.00E+00 | 0.00E+00 | 0.00E+00 |

In the second example, the optical system 10 satisfies the following conditions:

| i | $(dn/dt)_i/(nd_i-1)-\alpha_i$ | $(dn/dt)_i+(nd_i-1)*\alpha_i$ | $V_i*f/f_i$ |
|---|---|---|---|
| 1 | -27.84 | -0.29 | 20.56 |
| 2 | -2.92 | 12.27 | -1.18 |
| 3 | -7.25 | 5.90 | 7.78 |
| 4 | -10.08 | 4.58 | -9.10 |
| 5 | -23.14 | -0.08 | -15.84 |

(continued)

| i | $(dn/dt)_i/(nd_i-1)-\alpha_i$ | $(dn/dt)_i+(nd_i-1)*\alpha_i$ | $V_i*f/f_i$ |
|---|---|---|---|
| 6 | 1.24 | 12.91 | 0.65 |
| 7 | 2.55 | 16.55 | -2.18 |
| 8 | -23.96 | 0.91 | -7.01 |

and:

| | | | |
|---|---|---|---|
| $\Sigma(V_i*f/f_i)$ | -6.29 | Imgh/f | 1.21 |
| $\Sigma DT/TTL$ | 0.31 | f/EPD | 1.60 |
| BFL/f | 0.48 | | |

Third Example

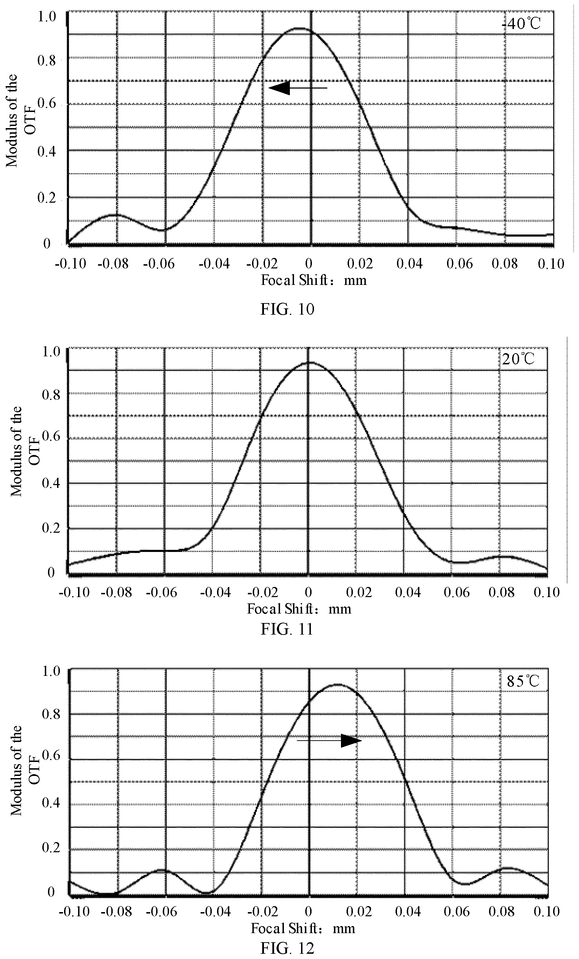

Referring to FIG. 9, in the third example, an optical system 10 includes, successively in order from an object side to an image side, a first lens L1 having a negative refractive power, a second lens L2 having a positive refractive power, a third lens L3 having a negative refractive power, a fourth lens L4 having a positive refractive power, a stop STO, a fifth lens L5 having a positive refractive power, a sixth lens L6 having a positive refractive power, a seventh lens L7 having a negative refractive power, and an eighth lens L8 having a positive refractive power. FIG. 10 is a defocus curve graph of the optical system 10 in the third example at a central field of view at -40°C. FIG. 11 is a defocus curve graph of the optical system 10 in the third example at the central field of view at 20°C. FIG. 12 is a defocus curve graph of the optical system 10 in the third example at the central field of view at 85°C.

An object side surface S1 of the first lens L1 is concave, and an image side surface S2 thereof is concave.

An object side surface S3 of the second lens L2 is convex, and an image side surface S4 thereof is convex.

An object side surface S5 of the third lens L3 is concave, and an image side surface S6 thereof is concave.

An object side surface S7 of the fourth lens L4 is convex, and an image side surface S8 thereof is convex.

An object side surface S9 of the fifth lens L5 is convex, and an image side surface S10 thereof is convex.

An object side surface S11 of the sixth lens L6 is convex, and an image side surface S12 thereof is convex.

An object side surface S13 of the seventh lens L7 is concave, and an image side surface S14 thereof is concave.

An object side surface S15 of the eighth lens L8 is convex, and an image side surface S16 thereof is concave.

Additionally, the parameters of the lenses of the optical system 10 are given in Table 5 and Table 6, wherein the definition of each of the parameters can be obtained from the first example and will not be repeated here.

Table 5

| Third Example | | | | | | | | |
|---|---|---|---|---|---|---|---|---|
| f=7.58 mm, FNO=1.65, FOV=76.0° | | | | | | | | |
| Surface number | Surface name | Surface shape | Y radius (mm) | Thickness (mm) | Material | Refractive index | Abbe number | Focal length (mm) |
| 0 | Object surface | Spheric | Infinite | 5000 | | | | |
| 1 | First lens | Spheric | -71.193 | 0.90 | Glass | 1.437 | 95.1 | -11.53 |
| 2 | | Spheric | 5.456 | 2.68 | | | | |
| 3 | Second lens | Spheric | 20.425 | 1.80 | Glass | 2.001 | 29.1 | 17.19 |
| 4 | | Spheric | -109.93 | 1.10 | | | | |
| 5 | Third lens | Spheric | -8.320 | 1.55 | Glass | 1.613 | 37.0 | -6.55 |

(continued)

| Surface number | Surface name | Surface shape | Y radius (mm) | Thickness (mm) | Material | Refractive index | Abbe number | Focal length (mm) |
|---|---|---|---|---|---|---|---|---|
| | | | Third Example | | | | | |
| | | | f=7.58 mm, FNO=1.65, FOV=76.0° | | | | | |
| 6 | Fourth lens | Spheric | 8.400 | 2.96 | Glass | 1.593 | 67.0 | 8.18 |
| 7 | | Spheric | -10.085 | 0.10 | | | | |
| | Stop | Spheric | Infinite | 0.10 | | | | |
| 9 | Fifth lens | Spheric | 11.974 | 2.76 | Glass | 1.593 | 67.0 | 12.51 |
| 10 | | Spheric | -17.991 | 0.10 | | | | |
| 11 | Sixth lens | Aspheric | 15.446 | 2.66 | Glass | 1.882 | 37.2 | 11.06 |
| 12 | | Aspheric | -24.751 | 0.12 | | | | |
| 13 | Seventh lens | Spheric | -96.306 | 1.00 | Glass | 1.805 | 25.5 | -8.41 |
| 14 | | Spheric | 7.390 | 5.11 | | | | |
| 15 | Eighth lens | Aspheric | 10.359 | 2.47 | Glass | 1.553 | 71.7 | 31.30 |
| 16 | | Aspheric | 23.47 | 3.30 | | | | |
| | Image surface | Spheric | Infinite | 0.00 | | | | |

Table 6

| Surface number | 11 | 12 | 15 | 16 |
|---|---|---|---|---|
| K | -6.82E-01 | 0.00E+00 | -2.62E+01 | 0.00E+00 |
| A4 | -1.95E-04 | 8.19E-07 | 1.59E-03 | -5.93E-04 |
| A6 | -3.61E-06 | 3.24E-06 | -1.76E-04 | -9.83E-06 |
| A8 | 1.60E-07 | -1.89E-08 | 1.42E-05 | -4.56E-07 |
| A10 | -9.00E-09 | 2.94E-11 | -1.11E-06 | 1.13E-08 |
| A12 | 1.87E-10 | 0.00E+00 | 6.93E-08 | 1.19E-11 |
| A14 | 0.00E+00 | 0.00E+00 | -3.10E-09 | 2.43E-14 |
| A16 | 0.00E+00 | 0.00E+00 | 9.01E-11 | 0.00E+00 |
| A18 | 0.00E+00 | 0.00E+00 | -1.50E-12 | 0.00E+00 |
| A20 | 0.00E+00 | 0.00E+00 | 1.09E-14 | 0.00E+00 |

In the third example, the optical system 10 satisfies the following conditions:

| $i$ | $(dn/dt)_i/(nd_i-1)-\alpha_i$ | $(dn/dt)_i+(nd_i-1)*\alpha_i$ | $V_i*f/f_i$ |
|---|---|---|---|
| 1 | -28.32 | -0.23 | 18.62 |
| 2 | -2.90 | 11.71 | -1.28 |
| 3 | -2.42 | 8.08 | 2.80 |
| 4 | -10.08 | 4.58 | -9.34 |
| 5 | -23.14 | -0.08 | -14.02 |

(continued)

| i | $(dn/dt)_i/(nd_i-1)-\alpha_i$ | $(dn/dt)_i+(nd_i-1)*\alpha_i$ | $V_i*f/f_i$ |
|---|---|---|---|
| 6 | 1.24 | 12.91 | 0.85 |
| 7 | 2.55 | 16.55 | -2.30 |
| 8 | -23.42 | 0.76 | -5.67 |

and:

| $\Sigma(V_i*f/f_i)$ | -10.34 | Imgh/f | 1.36 |
|---|---|---|---|
| $\Sigma DT/TTL$ | 0.32 | f/EPD | 1.65 |
| BFL/f | 0.44 | | |

Fourth Example

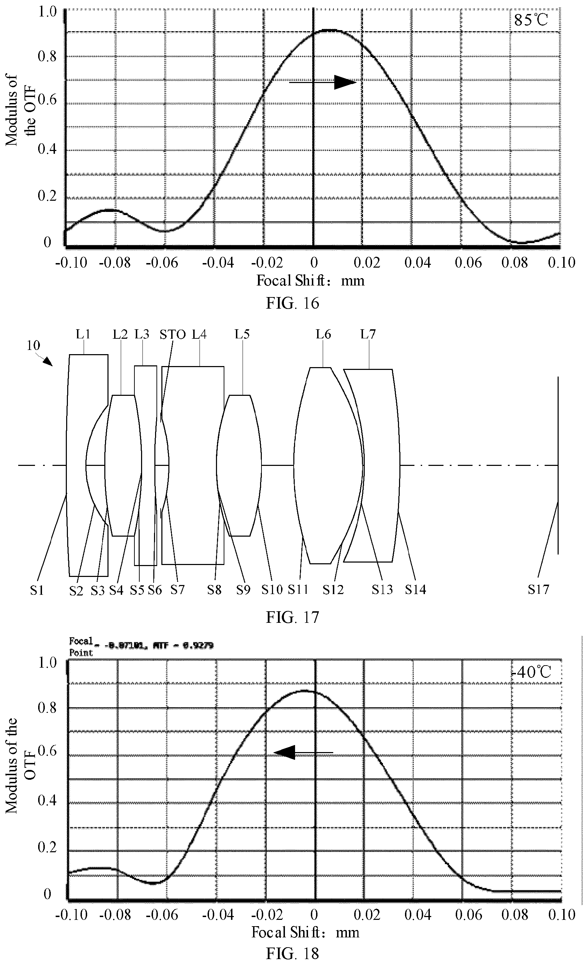

Referring to FIG. 13, in the fourth example, an optical system 10 includes, successively in order from an object side to an image side, a first lens L1 having a negative refractive power, a second lens L2 having a positive refractive power, a third lens L3 having a negative refractive power, a stop STO, a fourth lens L4 having a negative refractive power, a fifth lens L5 having a positive refractive power, a sixth lens L6 having a positive refractive power, and a seventh lens L7 having a negative refractive power. That is, the optical system 10 of such example has a seven-piece structure. FIG. 14 is a defocus curve graph of the optical system 10 in the fourth example at a central field of view at -40°C. FIG. 15 is a defocus curve graph of the optical system 10 in the fourth example at the central field of view at 20°C. FIG. 16 is a defocus curve graph of the optical system 10 in the fourth example at the central field of view at 85°C.

An object side surface S1 of the first lens L1 is convex, and an image side surface S2 thereof is concave.

An object side surface S3 of the second lens L2 is convex, and an image side surface S4 thereof is convex.

An object side surface S5 of the third lens L3 is concave, and an image side surface S6 thereof is concave.

An object side surface S7 of the fourth lens L4 is concave, and an image side surface S8 thereof is concave.

An object side surface S9 of the fifth lens L5 is convex, and an image side surface S10 thereof is convex.

An object side surface S11 of the sixth lens L6 is convex, and an image side surface S12 thereof is convex.

An object side surface S13 of the seventh lens L7 is concave, and an image side surface S14 thereof is convex.

Additionally, the parameters of the lenses of the optical system 10 are given in Table 7 and Table 8, wherein the definition of each of the parameters can be obtained from the first example and will not be repeated here.

Table 7

| Fourth Example | | | | | | | | |
|---|---|---|---|---|---|---|---|---|
| f=8.47 mm, FNO=2.0, FOV=70.7° | | | | | | | | |
| Surface number | Surface name | Surface shape | Y radius (mm) | Thickness (mm) | Material | Refractive index | Abbe number | Focal length (mm) |
| 0 | Object surface | Spheric | Infinite | 3000 | | | | |
| 1 | First lens | Spheric | 56.127 | 1.20 | Glass | 1.517 | 64.2 | -10.91 |
| 2 | | Spheric | 5.105 | 0.98 | | | | |
| 3 | Second lens | Spheric | 21.393 | 2.00 | Glass | 2.001 | 29.1 | 9.62 |
| 4 | Third lens | Spheric | -16.951 | 1.00 | Glass | 1.517 | 64.2 | -24.96 |
| 5 | | Spheric | 55.898 | 0.12 | | | | |
| | Stop | Spheric | Infinite | 0.71 | | | | |

(continued)

| Fourth Example | | | | | | | | |
|---|---|---|---|---|---|---|---|---|
| f=8.47 mm, FNO=2.0, FOV=70.7° | | | | | | | | |
| Surface number | Surface name | Surface shape | Y radius (mm) | Thickness (mm) | Material | Refractive index | Abbe number | Focal length (mm) |
| 7 | Fourth lens | Spheric | -8.459 | 2.85 | Glass | 1.752 | 25.0 | -6.34 |
| 8 | Fifth lens | Spheric | 12.814 | 2.70 | Glass | 1.871 | 40.7 | 7.03 |
| 9 | | Spheric | -10.694 | 2.85 | | | | |
| 10 | Sixth lens | Aspheric | 15.092 | 4.02 | Glass | 1.593 | 67.0 | 9.13 |
| 11 | | Aspheric | -7.645 | 0.10 | | | | |
| 12 | Seventh lens | Spheric | -14.108 | 1.50 | Glass | 1.752 | 25.0 | -24.93 |
| 13 | | Spheric | -57.971 | 9.96 | | | | |
| | Image surface | Spheric | Infinite | 0.00 | | | | |

Table 8

| Surface number | 10 | 11 |
|---|---|---|
| K | 1.08E+00 | -1.94E+00 |
| A4 | -1.07E-04 | -6.97E-05 |
| A6 | -1.55E-07 | 9.96E-07 |
| A8 | 0.00E+00 | 0.00E+00 |
| A10 | 0.00E+00 | 0.00E+00 |
| A12 | 0.00E+00 | 0.00E+00 |
| A14 | 0.00E+00 | 0.00E+00 |
| A16 | 0.00E+00 | 0.00E+00 |
| A18 | 0.00E+00 | 0.00E+00 |
| A20 | 0.00E+00 | 0.00E+00 |

In the fourth example, the optical system 10 satisfies the following conditions:

| i | $(dn/dt)_i/(nd_i-1)-\alpha_i$ | $(dn/dt)_i+(nd_i-1)*\alpha_i$ | $V_i*f/f_i$ |
|---|---|---|---|
| 1 | -2.38 | 6.63 | 1.84 |
| 2 | -2.90 | 11.71 | -2.56 |
| 3 | -2.38 | 6.63 | 0.81 |
| 4 | -4.37 | 5.89 | 5.84 |
| 5 | -2.32 | 9.82 | -2.79 |
| 6 | -10.25 | 4.48 | -9.51 |
| 7 | -4.37 | 5.89 | 1.49 |

and:

| $\Sigma(V_i*f/f_i)$ | -4.89 | Imgh/f | 1.21 |
|---|---|---|---|
| $\Sigma DT/TTL$ | 0.16 | f/EPD | 2.0 |
| BFL/f | 1.18 | | |

Fifth Example

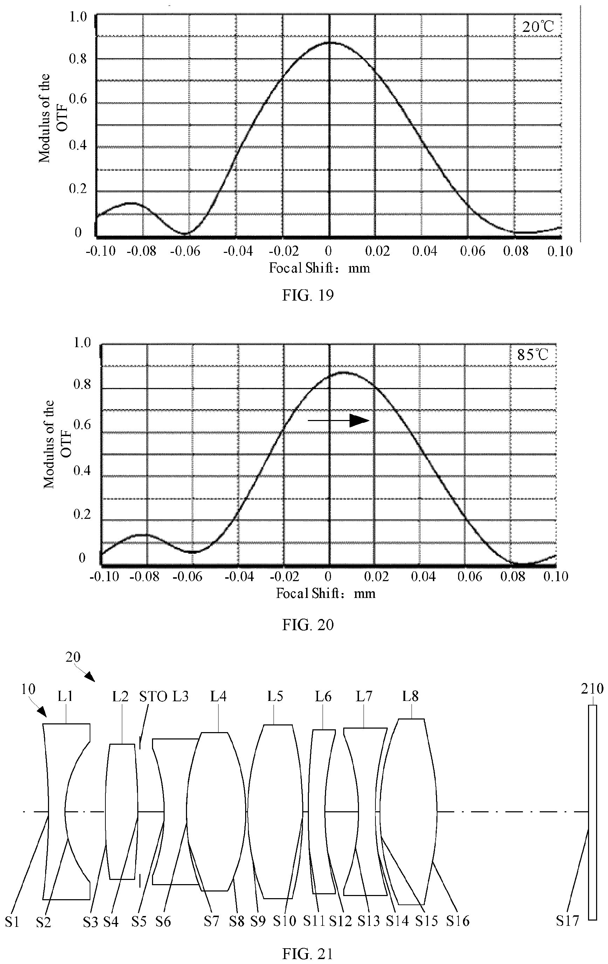

Referring to FIG. 17, in the fifth example, an optical system 10 includes, successively in order from an object side to an image side, a first lens L1 having a negative refractive power, a second lens L2 having a positive refractive power, a third lens L3 having a negative refractive power, a stop STO, a fourth lens L4 having a negative refractive power, a fifth lens L5 having a positive refractive power, a sixth lens L6 having a positive refractive power, and a seventh lens L7 having a negative refractive power. That is, the optical system 10 of such example has a seven-piece structure. FIG. 18 is a defocus curve graph of the optical system 10 in the fifth example at a central field of view at -40°C. FIG. 19 is a defocus curve graph of the optical system 10 in the fifth example at the central field of view at 20°C. FIG. 20 is a defocus curve graph of the optical system 10 in the fifth example at the central field of view at 85°C.

An object side surface S1 of the first lens L1 is convex, and an image side surface S2 thereof is concave.

An object side surface S3 of the second lens L2 is convex, and an image side surface S4 thereof is convex.

An object side surface S5 of the third lens L3 is concave, and an image side surface S6 thereof is concave.

An object side surface S7 of the fourth lens L4 is concave, and an image side surface S8 thereof is concave.

An object side surface S9 of the fifth lens L5 is convex, and an image side surface S10 thereof is convex.

An object side surface S11 of the sixth lens L6 is convex, and an image side surface S12 thereof is convex.

An object side surface S13 of the seventh lens L7 is concave, and an image side surface S14 thereof is convex.

Additionally, the parameters of the lenses of the optical system 10 are given in Table 9 and Table 10, wherein the definition of each of the parameters can be obtained from the first example and will not be repeated here.

Table 9

| Surface number | Surface name | Surface shape | Y radius (mm) | Thickness (mm) | Material | Refractive index | Abbe number | Focal length (mm) |
|---|---|---|---|---|---|---|---|---|
| | | | Fifth Example | | | | | |
| | | | f=8.48 mm, FNO= 1.9, FOV=71.7° | | | | | |
| 0 | Object surface | Spheric | Infinite | 3000 | | | | |
| 1 | First lens | Spheric | 106.127 | 1.20 | Glass | 1.487 | 70.4 | -11.34 |
| 2 | | Spheric | 5.250 | 1.15 | | | | |
| 3 | Second lens | Spheric | 18.460 | 2.24 | Glass | 2.023 | 27.91 | 9.44 |
| 4 | Third lens | Spheric | -19.338 | 0.80 | Glass | 1.517 | 52.2 | -23.14 |
| 5 | | Spheric | 32.253 | 0.35 | | | | |
| | Stop | Spheric | Infinite | 0.50 | | | | |
| 7 | Fourth lens | Spheric | -8.910 | 2.89 | Glass | 1.752 | 25.05 | -6.13 |
| 8 | Fifth lens | Spheric | 11.105 | 2.75 | Glass | 1.883 | 40.81 | 6.88 |
| 9 | | Spheric | -12.013 | 1.95 | | | | |
| 10 | Sixth lens | Aspheric | 15.254 | 4.20 | Glass | 1.593 | 66.97 | 9.23 |
| 11 | | Aspheric | -7.696 | 0.10 | | | | |
| 12 | Seventh lens | Spheric | -13.010 | 2.16 | Glass | 1.752 | 25.05 | -29.17 |
| 13 | | Spheric | -33.788 | 9.92 | | | | |

(continued)

| Fifth Example | | | | | | | | |
|---|---|---|---|---|---|---|---|---|
| f=8.48 mm, FNO= 1.9, FOV=71.7° | | | | | | | | |
| Surface number | Surface name | Surface shape | Y radius (mm) | Thickness (mm) | Material | Refractive index | Abbe number | Focal length (mm) |
| | Image surface | Spheric | Infinite | 0.00 | | | | |

Table 10

| Surface number | 10 | 11 |
|---|---|---|
| K | 9.09E-01 | -1.66E+00 |
| A4 | -1.15E-04 | -2.11E-05 |
| A6 | -3.95E-07 | 8.45E-08 |
| A8 | 0.00E+00 | 0.00E+00 |
| A10 | 0.00E+00 | 0.00E+00 |
| A12 | 0.00E+00 | 0.00E+00 |
| A14 | 0.00E+00 | 0.00E+00 |
| A16 | 0.00E+00 | 0.00E+00 |
| A18 | 0.00E+00 | 0.00E+00 |
| A20 | 0.00E+00 | 0.00E+00 |

In the fifth example, the optical system 10 satisfies the following conditions:

| i | $(dn/dt)_i/(nd_i-1)-\alpha_i$ | $(dn/dt)_i+(nd_i-1)*\alpha_i$ | $V_i*f/f_i$ |
|---|---|---|---|
| 1 | -2.06 | 6.40 | 1.54 |
| 2 | -3.00 | 11.87 | -2.66 |
| 3 | -2.38 | 6.63 | 0.86 |
| 4 | -4.37 | 5.89 | 5.98 |
| 5 | -0.72 | 10.84 | -0.88 |
| 6 | -10.25 | 4.48 | -9.32 |
| 7 | -4.37 | 5.89 | 1.26 |

and:

| $\Sigma(V_i*f/f_i)$ | -3.22 | Imgh/f | 1.22 |
|---|---|---|---|
| $\Sigma$DT/TTL | 0.13 | f/EPD | 1.9 |
| BFL/f | 1.17 | | |

The refractive index temperature coefficient $(dn/dt)_i$ and the thermal expansion coefficient $\alpha_i$ of each of the lenses in the first example to the fifth example above are shown in the following table, wherein a unit of $(dn/dt)_i$ is ($10^{-6}$/K), a unit of $\alpha_i$ is ($10^{-6}$/K), and $(dn/dt)_i$ is abbreviated as $dn/dt$ in the following.

| Material characteristic | First Example | | Second Example | | Third Example | | Fourth Example | | Fifth Example | |
|---|---|---|---|---|---|---|---|---|---|---|
| | dn/dt | $\alpha_i$ | dn/dt | $\alpha_i$ | dn/dt | $\alpha_i$ | dn/dt | $\alpha_i$ | dn/dt | $\alpha_i$ |
| First lens | -1.8 | 9.2 | -6.5 | 13.6 | -6.3 | 13.9 | 2.7 | 7.6 | 2.7 | 7.6 |
| Second lens | 4.6 | 7.3 | 4.6 | 7.3 | 4.4 | 7.3 | 4.4 | 7.3 | 4.4 | 7.3 |
| Third lens | 1.9 | 8.4 | 0.8 | 8.6 | 3.3 | 7.8 | 2.7 | 7.6 | 2.7 | 7.6 |
| Fourth lens | -7.6 | 12.4 | -0.7 | 8.9 | -0.7 | 8.9 | 1.3 | 6.1 | 1.3 | 6.1 |
| Fifth lens | 3.8 | 5.8 | -6.9 | 11.5 | -6.9 | 11.5 | 3.9 | 6.8 | 5.1 | 6.5 |
| Sixth lens | 9.3 | 9.0 | 7.0 | 6.7 | 7.0 | 6.7 | -0.8 | 8.9 | -0.8 | 8.9 |
| Seventh lens | 9.3 | 9.0 | 9.3 | 9 | 9.3 | 9.0 | 1.3 | 6.1 | 1.3 | 6.1 |
| Eighth lens | 7.6 | 6.0 | -5.5 | 12.9 | -6.1 | 12.4 | | | | |

In the defocus curve graphs provided in the above examples, the variation of the resolution when the center position of the image surface is offset from the position of the focal plane is reflected, and the position of the peak value in the graph is the optimal position for imaging in the central field of view. The shift direction of the optimal imaging surface when the temperature changes can be more clearly observed by the defocus curves of the central field of view in environments of different temperature. An characteristic of the optical system 10 in the examples of the present application can be obtained from the defocus curve graphs in the various examples, which is that: the position of the optimal imaging surface moves toward the positive direction when the temperature is positive, so that, the problem resulting from the photosensitive surface of the photosensitive element moving toward the positive direction due to thermal expansion of the non-optical mechanism member (for example, the base described above) can be compensated, making the position of the optimal imaging surface moves as synchronously as possible with the photosensitive surface; and the position of the optimal imaging surface moves toward the negative direction when the temperature is negative, so that the problem resulting from the photosensitive surface moving toward the positive direction due to cold shrinkage of the non-optical mechanism member can be compensated. By using the design of the present application, the optimal imaging position of the optical system 10 can be kept as consistent as possible with the position of the photosensitive surface, thereby avoiding the problem of defocusing of the system in a high temperature or low temperature environment, and enabling the system to achieve clearly imaging in an environment with changing temperature.

Referring to FIG. 21, in an example provided in the present application, an optical system 10 is assembled with a photosensitive element 210 to form a camera module 20. The photosensitive element 210 is arranged on an image side of the optical system 10. In the present example, an infrared cut-off filter is arranged between the optical system 10 and the photosensitive element 210. The photosensitive element 210 can be a Charge Coupled Device (CCD) or a Complementary Metal Oxide Semiconductor (CMOS).

In some examples, a distance between the photosensitive element 210 and each of the lenses in the optical system 10 is relatively fixed. In this case, the camera module 20 is a fixed focus module. In other examples, the focusing effect can be achieved by arranging a driving mechanism such as a voice coil motor to enable the photosensitive element 210 to move relative to each of the lenses in the camera module 20. Specifically, a coil electrically connected to a driving chip is arranged on a lens barrel on which the above lenses are mounted. In addition, the camera module 20 is further provided with a magnet. The lens barrel can be driven to move relative to the photosensitive element 210 by a magnetic force between the energized coil and the magnet, thereby achieving the focusing effect. In other examples, an optical zooming effect can also be achieved by arranging a similar driving mechanism to drive some lenses in the camera module 20 to move. By using the above optical system 10, in the case where the ambient temperature changes, the position of the optimal imaging surface of the optical system 10 can move accordingly when the temperature changes, so as to compensate for the positional offset of the photosensitive surface of the photosensitive element, thereby enabling the camera module 20 to have stable imaging quality in environments such as high temperature and low temperature.

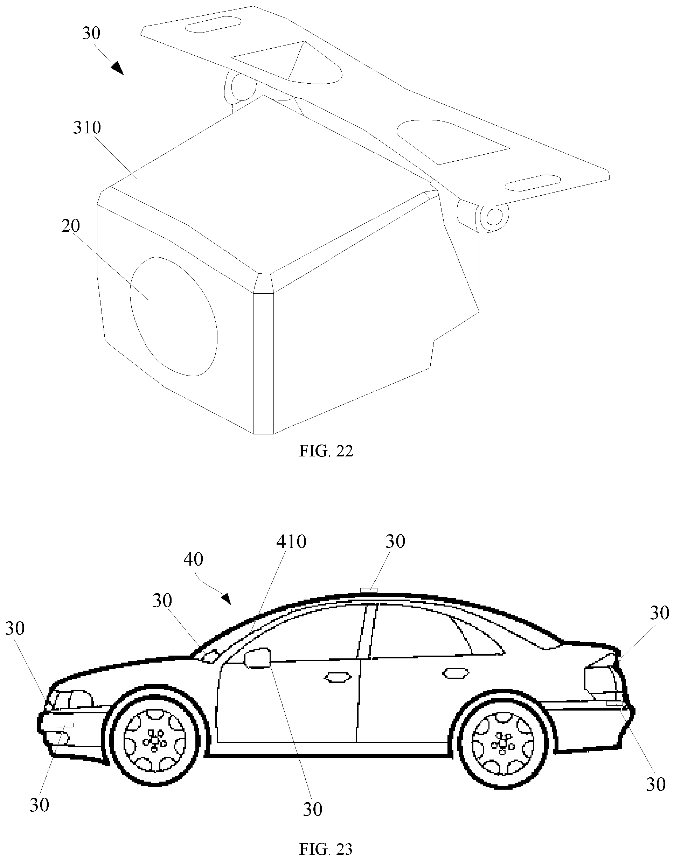

Referring to FIG. 22, some examples of the present application further provide an electronic device 30. The camera module 20 is applied to the electronic device 30 so that the electronic device 30 has a camera function. Specifically, the electronic device 30 includes a housing 310 on which the camera module 20 is mounted. The housing 310 can be a circuit board, a middle frame, a protective case, or the like. The electronic device 30 can be, but is not limited to, a smartphone, a smartwatch, an electronic book reader, a vehicle-mounted camera device, a monitoring device, a medical device (such as an endoscope), a tablet computer, a biometric device (such as a fingerprint recognition device or a pupil recognition device), a Personal Digital Assistant (PDA), a drone, or the like. Specifically, in some examples, the electronic device 30 is a smartphone. The smartphone includes a middle frame and a circuit board. The circuit board is arranged on the middle frame. The camera module 20 is mounted on the middle frame of the smartphone, and the photosensitive element 210 therein is electrically connected to the circuit board. In other examples, the electronic device 30 is a vehicle-mounted camera device (refer to FIG. 22 for detailed structure). The camera module 20 is arranged within the housing 310 of the vehicle-mounted camera device. The housing 310 is rotatably connected to a mounting plate. The mounting plate is used to be fixed on the vehicle body. By using the above camera module 20, the electronic device 30 still has excellent and stable imaging quality even when the temperature changes (for example, changes to a high temperature or a low temperature).

Referring to FIG. 23, some examples of the present application further provide a vehicle 40. When the electronic device 30 is the vehicle-mounted camera device, the electronic device 30 can be used as a front-view camera device, a rear-view camera device, or a side-view camera device of the vehicle 40. Specifically, the vehicle 40 includes a vehicle body 410 on which the housing 310 of the electronic device 30 is mounted. The electronic device 30 can be mounted on any position such as the front side of the vehicle body 410 (e.g., at the air intake grille), the left headlamp, the right headlamp, the left rear-view mirror, the right rear-view mirror, the boot cover plate, and the vehicle roof. In addition, a display device can be arranged within the vehicle 40, and the electronic device 30 is in communication with the display device, so that an image obtained by the electronic device 30 on the vehicle body 410 can be displayed on the display device in real time, thereby enabling a driver to obtain environmental information in a wider range around the vehicle body 410, and making it easier and safer for the driver to drive and park. When a plurality of electronic devices 30 are provided to obtain scenes of different orientations, the image information obtained by the electronic devices 30 can be synthesized and presented on the display device in the form of a top view.

Specifically, in some examples, the vehicle 40 includes at least four electronic devices 30 that are mounted on the front side (e.g., at the air intake grille), the left side (e.g., at the left rear-view mirror), the right side (e.g., at the right rear-view mirror), and the rear side (e.g., at the boot cover plate) of the vehicle body 410 respectively, to create a vehicle around view system. The vehicle around view system includes four (or more) electronic devices 30 that are mounted on the front side, rear side, right side, and left side of the vehicle body 410. The plurality of electronic devices 30 can simultaneously acquire the scenes around the vehicle 40. Then, image information collected by the electronic devices 30 is subjected to the steps of distortion reduction, view angle conversion, image stitching, image enhancement, and the like through an image processing unit, and finally a seamless 360-degree panoramic top view around the vehicle 40 is formed and displayed on the display device. Of course, in addition to displaying a panorama, a single-side view in any orientation can also be displayed. Additionally, a scale line corresponding to the displayed image can also be configured on the display device to facilitate the driver to accurately determine the orientation and distance of an obstacle. Since the electronic device 30 still has excellent imaging quality even when the temperature changes, by using the above electronic device 30 as a vehicle-mounted camera device, the vehicle 40 can still obtain an excellent and stable vehicle-mounted imaging picture when traveling in a high temperature environment (such as in an exposure to intense sun) or a low temperature environment (such as in a polar region), which is beneficial for improving the traveling safety in the corresponding environment.

The "electronic device" used in the examples of the present invention can include, but is not limited to, a device configured to receive/transmit communication signals via a wired line connection (such as via a public switched telephone network (PSTN), a digital subscriber line (DSL), a digital cable, a direct cable connection, and/or another data connection/network) and/or via a wireless interface (for, such as a cellular network, a wireless local area network (WLAN), a digital television network such as a digital video broadcasting handheld (DVB-H) network, a satellite network, an amplitude modulation-frequency modulation (AM-FM) broadcast transmitter, and/or another communication terminal). An electronic device configured to communicate through a wireless interface can be referred to as a "wireless communication terminal", "wireless terminal" and/or a "mobile terminal". Demonstrations of the mobile terminal include, but are not limited to, satellite or cellular phones; personal communication system (PCS) terminals that can combine cellular radiotelephone with data processing, facsimile and data communication capabilities; personal digital assistants (PDAs) that can include radiotelephone, pagers, Internet/Intranet access, Web browsers, notebooks, calendars, and/or global positioning system (GPS) receivers; and conventional laptop and/or handheld receivers or other electronic devices including radiotelephone transceivers.

In the description of the present application, it should be understood that the orientation or position relationship indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial direction", "radial direction", "circumferential direction" and so on is based on the orientation or position relationship shown in the drawings, which are only for the convenience of describing the present application and simplifying the description, rather than indicating or implying that the device or element must have a specific orientation, or be constructed and operated in a specific orientation, so it cannot be understood as a limitation of the application.

In addition, the terms such as "first" and "second" are only used for descriptive purposes and cannot be understood as indicating or implying relative importance or implicitly indicating the number of indicated technical features. Thus, the features defined with "first" and "second" may explicitly or implicitly include at least one of the features. In the description of the present application, "a plurality of' means at least two, such as two, three, etc., unless otherwise expressly and specifically defined.

In the present application, unless otherwise expressly specified and limited, the terms "mounting", "connecting", "coupling", "fixing" and other terms should be understood in a broad sense. For example, it can be a fixed connection, a removable connection, or an integration; it can be a mechanical connection or an electrical connection; it can be a direct connection or an indirectly connection through an intermediate medium; and it can be a connection within two elements or an interaction relationship between two elements, unless otherwise expressly limited. For those skilled in the art, the specific meaning of the above terms in the present application can be understood according to the specific situation.

In the present invention, unless otherwise expressly specified and limited, the first feature "on" or "under" the second feature can mean that be the first feature is in direct contact with the second feature, or the first feature is in indirect contact with the second feature through an intermediate medium. Moreover, the first feature is "on", "above" or "over" the second feature can mean that the first feature is directly above or obliquely above the second feature, or it can only mean that the horizontal height of the first feature is higher than that of the second feature. The first feature is "under", "below" or "beneath" the second feature can mean that the first feature is directly below or obliquely below the second feature, or it can only mean that the horizontal height of the first feature is less than that of the second feature.

In the description of the present specification, reference to the terms such as "an example", "some examples", "demonstration", "specific demonstration", or "some demonstrations", etc. means that a particular feature, structure, material, or characteristic described in connection with the example or demonstration is included in at least one example or demonstration of the application. In the present specification, the indicative expressions of the above terms are not necessarily to be directed to the same example or demonstration. Moreover, the specific features, structures, materials, or characteristics described can be combined in any one or more examples or demonstrations in a suitable manner. Further, in the case of no contradiction, those skilled in the art can merge and combine the various examples or demonstrations, as well as the features of the various examples or demonstrations described in the present specification.

The technical features of the above examples can be combined arbitrarily. In order to simplify the description, not all possible combinations of the technical features in the above examples are described. However, as long as there is no contradiction in the combinations of these technical features, they all should be fallen within the scope described in this specification.

The above examples represent only a few implementations of the invention. Though the description thereof is rather specific and detailed, it is not to be construed as a limitation on the scope of the present application. It should be noted that for those skilled in the art, several modifications and improvements can be made without departing from the concept of the present application, which are fallen within the protection scope of the present application. Accordingly, the protection scope of the present application should be subject to the appended claims.

**Claims**

1. An optical system, comprising, successively in order from an object side to an image side:

      a first lens having a negative refractive power,
      a second lens having a positive refractive power,
      a third lens having a refractive power,
      a fourth lens having a refractive power,
      a fifth lens having a positive refractive power,
      a sixth lens having a refractive power, and
      a seventh lens having a negative refractive power;
      and wherein at least one of the lenses in the optical system satisfies the following condition:

$$(dn/dt)_i/(nd_i-1)-\alpha_i < 0,$$

      wherein $(dn/dt)_i$ is a refractive index temperature coefficient of an $i$-th lens, a unit of $(dn/dt)_i$ is $(10^{-6}/K)$, $nd_i$ is a d-light refractive index of the $i$-th lens, and $\alpha_i$ is a thermal expansion coefficient of the $i$-th lens, a unit of $\alpha_i$ is $(10^{-6}/K)$.

2. The optical system according to claim 1, **characterized in that**, further comprising an eighth lens arranged on an image side of the seventh lens, wherein the eighth lens has a positive refractive power.

3. The optical system according to claim 2, **characterized in that**, an object side surface of the eighth lens is convex, and an image side surface of the eighth lens is convex or concave.

4. The optical system according to claim 1 or 2, **characterized in that**, an object side surface of the first lens is convex or concave, and an image side surface of the first lens is concave; an object side surface and an image side surface of the second lens are both convex; an object side surface and an image side surface of the third lens are both concave; an object side surface and an image side surface of the fourth lens are both convex or concave; an object side surface and an image side surface of the fifth lens are both convex; an object side surface of the sixth lens is convex, and an image side surface of the sixth lens is concave or convex; and an object side surface of the seventh lens is concave or convex, and an image side surface of the seventh lens is concave or convex.

5. The optical system according to claim 1 or 2, **characterized in that**, an object side surface and an image side surface of the second lens are both convex, an object side surface and an image side surface of the third lens are both concave, and the second lens and the third lens are cemented together to form a cemented lens.

6. The optical system according to claim 1 or 2, **characterized in that**, an object side surface and an image side surface of the third lens are both concave, an object side surface and an image side surface of the fourth lens are both convex, and the third lens and the fourth lens are cemented together to form a cemented lens.

7. The optical system according to claim 1 or 2, **characterized in that**, an object side surface and an image side surface of the fourth lens are both concave, an object side surface and an image side surface of the fifth lens are both convex, and the fourth lens and the fifth lens are cemented together to form a cemented lens.

8. The optical system according to claim 1 or 2, **characterized in that**, an object side surface of at least one of the lenses in the optical system is aspheric.

9. The optical system according to claim 1 or 2, **characterized in that**, an image side surface of at least one of the lenses in the optical system is aspheric.

10. The optical system according to claim 1 or 2, **characterized in that**, at least one of the lenses in the optical system satisfies the following condition:

$$(dn/dt)_i + (nd_i - 1)^* \alpha_i < 17.$$

11. The optical system according to claim 1 or 2, **characterized in that**, further satisfying the following condition:

$$0.1 < \Sigma DT/TTL < 0.5,$$

wherein $\Sigma DT$ is a sum of spacing distances between adjacent lenses of the lenses on an optical axis in the optical system, and $TTL$ is a total optical length of the optical system.

12. The optical system according to claim 1 or 2, **characterized in that**, at least one of the lenses in the optical system satisfies the following condition:

$$V_i^* f/f_i < 0,$$

wherein $V_i = (dn/dt)_i/(nd_i-1) - \alpha_i$, $f$ is an effective focal length of the optical system, and $f_i$ is a focal length of the $i$-th lens.

13. The optical system according to claim 1 or 2, **characterized in that**, further satisfying the following condition:

$$\Sigma(V_i^* f/f_i) < 0,$$

wherein $V_i = (dn/dt)_i/(nd_i-1) - \alpha_i$, $f$ is an effective focal length of the optical system, $f_i$ is a focal length of the $i$-th lens, and $\Sigma(V_i^* f/f_i)$ is a sum of values of $V_i^* f/f_i$ of all lenses in the optical system.

14. The optical system according to claim 1 or 2, **characterized in that**, further satisfying the following condition:

$$0.3 < BFL/f < 1.5,$$

wherein *BFL* is a rear focal length of the optical system, and *f* is an effective focal length of the optical system.

15. The optical system according to claim 1 or 2, **characterized in that**, further satisfying the following condition:

$$1 < Imgh/f < 2,$$

wherein *Imgh* is a diagonal length of an effective imaging region of the optical system on an imaging surface, and *f* is an effective focal length of the optical system.

16. The optical system according to claim 1 or 2, **characterized in that**, further satisfying the following condition:

$$f/EPD \leq 2.0,$$

wherein *f* is an effective focal length of the optical system, and *EPD* is an entrance pupil diameter of the optical system.

17. The optical system according to claim 1 or 2, **characterized in that**, further satisfying the following condition:

$$f/EPD \leq 1.6,$$

wherein *f* is an effective focal length of the optical system, and *EPD* is an entrance pupil diameter of the optical system.

18. A camera module, comprising:

a photosensitive element; and
the optical system according to any one of claims 1 to 17,
wherein the photosensitive element is arranged on the image side of the optical system.

19. An electronic device, comprising:

a housing; and
the camera module according to claim 18,
wherein the camera module is arranged on the housing.

20. A vehicle, comprising:

a vehicle body; and
an electronic device according to claim 19,
wherein the electronic device is arranged on the vehicle body.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

## INTERNATIONAL SEARCH REPORT

| International application No. |
|---|
| **PCT/CN2020/076235** |

### A. CLASSIFICATION OF SUBJECT MATTER

G02B 13/00(2006.01)i; G02B 13/18(2006.01)i

According to International Patent Classification (IPC) or to both national classification and IPC

### B. FIELDS SEARCHED

Minimum documentation searched (classification system followed by classification symbols)

G02B9; G02B13

Documentation searched other than minimum documentation to the extent that such documents are included in the fields searched

Electronic data base consulted during the international search (name of data base and, where practicable, search terms used)

CNABS, CNTXT, DWPI, SIPOABS, JPABS: 温度, 温差, 热膨胀, 热胀, 一, 二, 五, 七, 正, 负, lens, first, second, fifth, seventh, positive, negative, temperature, heat, expansion

### C. DOCUMENTS CONSIDERED TO BE RELEVANT

| Category* | Citation of document, with indication, where appropriate, of the relevant passages | Relevant to claim No. |
|---|---|---|
| A | CN 109960004 A (NINGBO SUNNY AUTOMOTIVE OPTICAL TECHNOLOGY CO., LTD.) 02 July 2019 (2019-07-02)<br>description, paragraphs 41-58, and figures 1-3 | 1-20 |
| A | CN 202886713 U (LARGAN PRECISION CO., LTD.) 17 April 2013 (2013-04-17)<br>entire document | 1-20 |
| A | JP 2013160981 A (OLYMPUS IMAGING CORP.) 19 August 2013 (2013-08-19)<br>entire document | 1-20 |
| A | US 2012229692 A1 (MATSUMURA YOSHIO et al.) 13 September 2012 (2012-09-13)<br>entire document | 1-20 |
| A | CN 106154488 A (SAMSUNG ELECTRO-MECHANICS CO., LTD.) 23 November 2016 (2016-11-23)<br>entire document | 1-20 |

☐ Further documents are listed in the continuation of Box C.    ☑ See patent family annex.

| | |
|---|---|
| \*   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **20 November 2020** | **01 December 2020** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/076235**

| Patent document cited in search report | | | Publication date (day/month/year) | Patent family member(s) | | | Publication date (day/month/year) |
|---|---|---|---|---|---|---|---|
| CN | 109960004 | A | 02 July 2019 | None | | | |
| CN | 202886713 | U | 17 April 2013 | US | 9042036 | B2 | 26 May 2015 |
| | | | | TW | 201407187 | A | 16 February 2014 |
| | | | | US | 9835823 | B2 | 05 December 2017 |
| | | | | CN | 103592746 | B | 05 August 2015 |
| | | | | US | 2018067286 | A1 | 08 March 2018 |
| | | | | US | 2016085057 | A1 | 24 March 2016 |
| | | | | US | RE46710 | E | 13 February 2018 |
| | | | | US | 10401595 | B2 | 03 September 2019 |
| | | | | CN | 103592746 | A | 19 February 2014 |
| | | | | TW | I449947 | B | 21 August 2014 |
| | | | | US | 2019025552 | A1 | 24 January 2019 |
| | | | | US | 10101564 | B2 | 16 October 2018 |
| | | | | US | 2014226220 | A1 | 14 August 2014 |
| | | | | US | 2015192761 | A1 | 09 July 2015 |
| | | | | CN | 104965295 | A | 07 October 2015 |
| | | | | US | 9235033 | B2 | 12 January 2016 |
| | | | | US | 2014043694 | A1 | 13 February 2014 |
| | | | | US | 8947788 | B2 | 03 February 2015 |
| | | | | US | 2019339494 | A1 | 07 November 2019 |
| | | | | CN | 104965295 | B | 07 July 2017 |
| | | | | US | 2015103227 | A1 | 16 April 2015 |
| | | | | US | 8736979 | B2 | 27 May 2014 |
| JP | 2013160981 | A | 19 August 2013 | JP | 5901322 | B2 | 06 April 2016 |
| US | 2012229692 | A1 | 13 September 2012 | JP | 2012198503 | A | 18 October 2012 |
| CN | 106154488 | A | 23 November 2016 | US | 2016109687 | A1 | 21 April 2016 |
| | | | | KR | 101659167 | B1 | 22 September 2016 |
| | | | | US | 2020264408 | A1 | 20 August 2020 |
| | | | | US | 10114195 | B2 | 30 October 2018 |
| | | | | US | 2019025554 | A1 | 24 January 2019 |
| | | | | CN | 110082889 | A | 02 August 2019 |
| | | | | US | 10678026 | B2 | 09 June 2020 |
| | | | | KR | 20160044818 | A | 26 April 2016 |
| | | | | CN | 106154488 | B | 15 March 2019 |

Form PCT/ISA/210 (patent family annex) (January 2015)